# EUROPEAN PATENT APPLICATION

(11) **EP 4 459 231 A1**
(43) Date of publication of application: **06.11.2024**
(21) Application number: 22927812.2
(22) Date of filing: 26.02.2022
(51) Int. Cl.: G01C 21/26

(54) **MAP DATA PROCESSING METHOD AND DEVICE**

(71) Applicant: Huawei Technologies Co., Ltd., Shenzhen, Guangdong 518129 (CN)
(72) Inventor: FEI, Wenkai, Shenzhen, Guangdong 518129 (CN); YANG, Miao, Shenzhen, Guangdong 518129 (CN); LIU, Jianqin, Shenzhen, Guangdong 518129 (CN)
(74) Representative: Gill Jennings & Every LLP
(86) International application number: PCT/CN2022/078123
(87) International publication number: WO 2023/159529

(57) **Abstract**

This application discloses a map data processing method and apparatus. The method includes: obtaining risk event information that includes time information and location information, where the time information indicates a predicted time range of a risk event, and the location information indicates a predicted region range of the risk event. According to this application, prediction of a risk event that may occur in a specific geographical region range can be provided, and richness of map information is improved. In addition, a lowest-risk path can be further planned based on the risk event information, so that not only travel strategies of a vehicle are enriched, but also travel safety of the vehicle is improved.

## Description

### TECHNICAL FIELD

This application relates to the map field, and in particular, to a map data processing method and apparatus.

### BACKGROUND

Development of map technologies brings great convenience to people in the travel field. For example, path planning and providing navigation information for travel are implemented by using maps. Alternatively, an accident or congested road section is displayed by using a map, so that a traveler can avoid the congested or accident road section and perform new path planning. However, intelligent driving and intelligent transportation in the future pose a higher requirement on richness of map information, and existing richness of map content cannot fully satisfy the requirement for use in the future.

### SUMMARY

This application discloses a map data processing method and apparatus, to provide prediction information of a risk event that may occur in a specific geographical region range, so as to improve richness of map information.

According to a first aspect, this application provides a map data processing method. The method includes: obtaining risk event information, where the risk event information includes time information and location information, the time information indicates a predicted time range of a risk event, and the location information indicates a predicted region range of the risk event; and storing the risk event information as map data.

The risk event is an event that affects traveling (or driving) safety or traveling smoothness of a vehicle. In other words, the risk event is an event that has potential impact on the traveling (or driving) safety or the traveling smoothness of the vehicle.

The predicted time range is a time range in which the risk event may occur, and is not necessarily a time range in which the risk event actually occurs. The predicted region range is a region range in which the risk event may occur, and is not necessarily a region range in which the risk event actually occurs.

The method may be applied to a network side device, a road side device, or a terminal. The network side device may be, for example, a server (for example, an application server or a map server) deployed on a network side, or a component or a chip in the server. The network side device may be deployed in a cloud environment or an edge environment. This is not specifically limited in embodiments of this application. The road side device may be, for example, an apparatus like a road side unit (Road Side Unit, RSU), multi-access edge computing (Multi-Access Edge Computing, MEC), or a sensor, or a component or a chip inside these apparatuses, or may be a system-level device including an RSU and an MEC, or may be a system-level device including an RSU and a sensor, or may be a system-level device including an RSU, an MEC, and a sensor. The terminal may be, for example, any device like a vehicle or a portable mobile device (for example, a mobile phone or a tablet), or may be an apparatus, a component, or a chip in any one of the foregoing devices, for example, an on board unit (On Board Unit, OBU). This is not specifically limited in embodiments of this application.

In the foregoing method, the obtained risk event information can provide prediction information of the risk event that may occur in a specific geographical region range, for example, the predicted time range of the risk event and the predicted region range of the risk event. The risk event information is stored as map data, so that not only richness of the map data can be improved, but also the map data can satisfy richer use requirements.

Optionally, the method further includes: planning a lowest-risk path based on the risk event information.

In the foregoing implementation, the lowest-risk path enriches travel strategies of a user, and further helps improve travel safety of the vehicle.

Optionally, the method further includes: recommending the lowest-risk path to the user, or controlling the vehicle to travel along the lowest-risk path.

In the foregoing implementation, the lowest-risk path provides another choice for the travel strategies of the user. The vehicle is controlled to travel along the lowest-risk path, so that the vehicle can travel safely.

Optionally, the method further includes: recommending a plurality of paths to the user, where the plurality of paths include the lowest-risk path; receiving feedback information from the user, where the feedback information indicates a path selected by the user from the plurality of paths; and controlling the vehicle to travel along the selected path.

In the foregoing implementation, in addition to the lowest-risk path, the plurality of paths may further include at least one of a shortest-duration path, a shortest-distance path, a least-walking path, a coolest path, and the like. This greatly enriches travel strategies of the user, and the user may alternatively freely select a desired path based on an actual requirement of the user. This improves interaction experience of the user.

Optionally, the planning a lowest-risk path based on the risk event information includes: planning the lowest-risk path of the vehicle based on the risk event information and a sensing capability of the vehicle; planning the lowest-risk path of the vehicle based on the risk event information and a vehicle type of the vehicle; or planning the lowest-risk path of the vehicle based on the risk event information and an autonomous driving level of the vehicle.

The vehicle can effectively sense an ambient environment by using a sensing element (or referred to as a vehicle-mounted sensor) of the vehicle. The sensing capability of the vehicle includes sensing of the vehicle and sensing of the environment. Components used to sense the vehicle include sensors in a power, a chassis, a vehicle body, an electronic and electrical system, and the like. Components used to sense the environment include the vehicle-mounted camera, a millimeter-wave radar, a lidar, and the like. Different sensing elements are configured for different vehicles. As a result, different vehicles have different sensing capabilities. Therefore, vehicles having different sensing capabilities may have different capabilities of responding to a same risk event. For example, a sensor loaded in a vehicle has a low sensing capability in a dark environment, and it is predicted, based on the risk event information, that a road section has a high traveling risk in a night time period. In this case, when a night travel path is planned for the vehicle, the road section indicated by the risk event information is avoided as much as possible.

Vehicles may be classified into a plurality of types. For example, based on a power apparatus type, the vehicles may be classified into internal combustion engine vehicles, electric vehicles, jet vehicles, and the like. Based on a space size, the vehicles may be classified into mini vehicles, small-sized vehicles, compact vehicles, medium-sized vehicles, medium- and large-sized vehicles, and the like. In some possible embodiments, classification may be performed in another form. A classification manner of the vehicle type is not specifically limited in this application. Vehicles of different types may have different capabilities of responding to a same risk event. For example, if a road section has a large slope, and it is estimated that snow is to occur in a time period, it is predicted, based on the risk event information, that the road section has a high traveling risk in the time period. Therefore, when a travel path related to the time period is planned for a vehicle model with a poor ramping capability, the road section indicated by the risk event information is avoided as much as possible.

There may be six autonomous driving levels, and the levels are L0 (no autonomous driving), L1 (driving support), L2 (partially autonomous driving), L3 (conditionally autonomous driving), L4 (highly autonomous driving), and L5 (fully autonomous driving) in ascending order. A higher level indicates a stronger autonomous driving capability of a vehicle. When the vehicle is at different autonomous driving levels, capabilities of responding to a same risk event may also be different. For example, if it is predicted, based on the risk event information, that a road section has a high traveling risk in a time period due to a large population flow, when a travel path related to the time period is planned for a vehicle in a high-level autonomous driving state, the road section indicated by the risk event information is avoided as much as possible.

In the foregoing implementation, the lowest-risk path is planned with reference to the sensing capability of the vehicle, the vehicle type, or the autonomous driving level of the vehicle, so that the lowest-risk path matches a risk response capability of the vehicle, and accuracy of the lowest-risk path is further improved.

Optionally, the lowest-risk path is a path with no risk event, a path with no risk event whose risk level exceeds a risk threshold, or a path with no risk event of a specific risk type.

The lowest-risk path being a path with no risk event may be understood as a region that the lowest-risk path passes through within a specific time range is a region with no risk event. The lowest-risk path being a path with no risk event whose risk level exceeds the risk threshold may be understood that a predicted risk event exists in a region that the lowest-risk path passes through within a specific time range, but a risk level of the risk event does not exceed the risk threshold (that is, it is considered that a larger value of a risk level indicates a more dangerous risk event). The lowest-risk path being a path with no risk event of the specific risk type may be understood that a predicted risk event exists in a region that the lowest-risk path passes through within a specific time range, but a risk type of the risk event is not of the specific risk type.

Optionally, the planning a lowest-risk path based on the risk event information includes: planning a plurality of paths; determining that the predicted region range includes a location point in the plurality of paths; estimating that the vehicle travels to the location point at an estimated time; determining, based on the time information and the location information in the risk event information, the predicted time range corresponding to the predicted region range; determining that the predicted time range includes the estimated time; determining a traveling risk of at least one of the plurality of paths based on the risk event; and determining the lowest-risk path in the plurality of paths based on the traveling risk.

In the foregoing implementation, the lowest-risk path is a path with a lowest traveling risk in the plurality of paths. The lowest-risk path needs to be determined with reference to two dimensions: space and time. To be specific, during path planning, each location point in a path and an estimated time at which the vehicle arrives at each location point need to be comprehensively considered, so that a location point corresponding to the estimated time does not belong to the predicted region range of the risk event or each estimated time does not belong to the predicted time range of the risk event as far as possible.

For example, it is assumed that a vehicle arrives at a point C from a point A by passing through a point B, and there are risk events near the three points A, B, and C at a current moment. However, when a lowest-risk path is planned, not only a path is planned for the vehicle based on the risk events at the three points at the current moment, but also estimated times for a vehicle-end device to arrive at the three points A, B, and C are considered. For example, it is estimated that the vehicle-end device arrives at the point A at a moment t1, arrives at the point B at a moment t2, and arrives at the point C at a moment t3. In this case, a path is planned by separately using risk event information near the point A at the moment t1, risk event information near the point B at the moment t2, and risk event information near the point C at the moment t3.

Optionally, the obtaining risk event information includes: generating the risk event information, or receiving the risk event information.

When the obtaining risk event information is generating the risk event information, the method may be performed by a network side device, a road side device, or a terminal, for example, a map server, a component or a chip in a map server, a road side device, a vehicle, a mobile terminal, or a component or a chip in a road side device, a vehicle, or a mobile terminal. When the obtaining risk event information is receiving the risk event information, the method may also be performed by a network side device, a road side device, or a terminal, for example, an application server that provides a service by using the risk event information, a road side device that provides road side indication information by using the risk event information, a vehicle that uses the risk event information for driving, or a portable terminal (for example, a mobile phone, a portable computer, or a navigator), or may be a component, a chip, or an application that can be applied to the foregoing devices.

Optionally, the method is applied to the vehicle, or the method further includes: sending the risk event information to the vehicle, where the vehicle satisfies at least one of the following conditions:
the vehicle is in the predicted region range;
a minimum distance between the vehicle and the predicted region range is less than a first threshold;
the predicted region range has an intersection with a planned path of the vehicle;
a minimum distance between the predicted region range and the planned path of the vehicle is less than a second threshold;
a tile to which the predicted region range belongs is a tile on which the vehicle is located; and
the tile to which the predicted region range belongs is a tile that the planned path of the vehicle passes through.

When the method is applied to the vehicle, that is, the vehicle obtains the risk event information and stores the risk event information as map data, the vehicle may obtain and store, based on a current location or a planned path of the vehicle, map data of a region in a specific geographical range or a region related to a navigation path, to obtain and store risk event information of a local region that has a large correlation with the vehicle. In this way, storage space of the map data in the vehicle can be reduced, and efficiency of using the risk event information by the vehicle can be improved.

In addition, when the risk event information is sent to the vehicle, it indicates that the vehicle may also be used as a user of the risk event information. In this case, the vehicle used as the user needs to satisfy the limitation on the location of the vehicle in the foregoing conditions, so that the vehicle used as the user of the risk event information obtains the risk event information of the local region that has a large correlation with the vehicle. In this way, data transmission traffic can be reduced, storage space of the map data in the vehicle that uses the risk event information is also reduced, and efficiency of using the risk event information by the vehicle is improved.

Optionally, the predicted region range is located on a road or a lane in a map.

In the foregoing implementation, a road-level geometric expression or a lane-level geometric expression may be performed on the predicted region range.

Optionally, the risk event information further includes at least one of the following content: identification information of the risk event, identification information of a tile to which the risk event belongs, identification information of a road on which the risk event is located, risk level information, risk type information, warning information, identification information of a dynamic element that affects the risk event, and information about a map element that is affected by the risk event. The risk level information indicates a danger degree of the risk event, the risk type information indicates a type of the risk event, and the warning information indicates content with which a driver or a driving system is prompted based on the risk event.

The risk level information is optional information of the risk event information. Risk degrees of risk events are quantified in levels based on the risk level information, to effectively distinguish between risk events of different danger degrees. This helps distinguish between priorities.

The risk type information is optional information of the risk event information. A type of a risk that may be faced can be quickly determined based on the risk type information, to better cope with the risk event. For example, the risk type information may be obtained by classifying and describing the risk event based on a reason for generating the risk event, or may be obtained by classifying and describing the risk event based on a result caused by the risk event. There are a plurality of specific classification manners. This is not limited herein in this application.

The identification information of the dynamic element that affects the risk event is optional information of the risk event information. The dynamic element associated with the risk event can be quickly indexed based on the identification information of the dynamic element that affects the risk event. When it is detected that the associated dynamic element changes, the risk event information can be quickly updated in a linkage manner. For example, a traffic congestion event is a dynamic element and may cause vehicle scratching. In this case, an identifier of the traffic congestion event is used as content of risk event information about the vehicle scratching.

The information about the map element that is affected by the risk event is optional information of the risk event information. The corresponding map element that is affected by the risk event can be quickly indexed based on the information about the map element, and when the risk event changes, a linkage update of the information about the map element that is affected by the risk event can be implemented. This not only improves accuracy of the map data, but also improves update efficiency of the map data.

The warning information is optional information of risk event information. The driver may be notified of a risk event in a region ahead of the driver in a timely manner based on the warning information. This helps improve travel safety of the vehicle.

The identification information of the risk event, the identification information of the tile to which the risk event belongs, and the identification information of the road on which the risk event is located are all optional information of the risk event information. The risk event is associated with an identifier of the map tile, so that the risk event can be quickly indexed based on the identifier of the map tile. The risk event is associated with a road identifier, so that the risk event can be quickly indexed based on the road identifier. In this way, efficiency of searching for the risk event and efficiency of releasing the risk event information are effectively improved.

Optionally, the method further includes: determining that an element that affects the risk event changes, where the element is located at a static layer or a dynamic layer of the map; and updating the risk event information or eliminating the risk event information based on the changed element.

In the foregoing implementation, when it is determined that the element that affects the risk event changes, a linkage update of the risk event information may be implemented or the risk event information may be eliminated based on a mapping relationship between an element identifier and a risk event identifier. The elimination of the risk event information means that the corresponding risk event is predicted to not occur.

Optionally, the method further includes: performing road condition monitoring, traffic scheduling, path planning, or vehicle control based on the risk event information.

In the foregoing implementation, a plurality of application services may be provided based on the risk event information, for example, macro control services such as road condition monitoring and traffic scheduling, and personalized and customized services such as path planning and vehicle control.

Optionally, the method further includes: determining that the vehicle is to pass through the predicted region range in which the risk event is located; and controlling the vehicle to perform at least one of the following operations: changing a lane; adjusting a traveling speed; updating a navigation path; turning on a warning light; and prompting the driver with the risk event.

In the foregoing implementation, when the vehicle is to pass through the predicted region range in which the risk event is located, a plurality of response strategies are provided, so that the vehicle can accurately respond to the risk event in a timely manner. This improves travel safety of the vehicle.

Optionally, the method further includes: determining, based on road topology information in the map, a road region associated with the predicted region range; and prompting a vehicle in the road region with the risk event, or control a traffic volume of the road region.

That the road region is associated with the predicted range region includes but is not limited to: A distance between the road region and the predicted region range is less than or equal to a preset distance threshold; traffic between the road region and the predicted region range is available; or an estimated moment at which the vehicle in the road region arrives at the predicted region range in which the risk event is located belongs to the predicted time range corresponding to the risk event. The road region may be one or more lanes, or may be one or more roads, or may be a set including at least one lane and at least one road.

In the foregoing implementation, based on the risk event information and the road topology information in the map, a risk event prompt may be performed in advance on a vehicle in a specific geographical region range, and a vehicle traffic volume in the corresponding geographical region range can be further controlled, to implement traffic scheduling, so as to avoid a traffic accident as much as possible.

Optionally, the method further includes presenting the risk event information on a map display interface in at least one of the following manners.

A change of the risk event is dynamically displayed on the interface based on the time information and the location information. In this manner, the user can accurately know a change trend of the risk event in a nearby region in advance, so as to adjust a response strategy of the user in a timely manner. This improves safety of the user.

A predicted region range of at least one risk event whose risk level at a current time exceeds a threshold in the risk event and description information of the at least one risk event are marked. In this manner, the risk level of the marked risk event is limited, to filter out a risk event that does not satisfy the threshold condition, so that the user can focus on the risk event whose risk level exceeds the threshold.

A predicted region range of at least one risk event related to the navigation path in the risk event and description information of the at least one risk event are marked. Further, the risk event related to the navigation path needs to satisfy two dimensions: space and time. For example, the navigation path indicates that the vehicle arrives at a point C from a point A by passing through a point B, and it is estimated that times at which the vehicle arrives at the three points A, B, and C are 11, t2, and t3 respectively. In this case, the risk event related to the navigation path includes a risk event near the point A at the moment t1, a risk event near the point B at the moment t2, and a risk event near the point C at the moment t3. In some possible embodiments, distances of locations in the navigation path are considered, and a risk event near a location point closest to a current location in the navigation path may be preferentially displayed.

A predicted region range of at least one risk event at a time selected by the user and description information of the at least one risk event are marked. In this manner, the user may select a time period of interest, and display related information of a corresponding risk event based on the selected time period.

A predicted region range of at least one risk event that satisfies a risk type selected by the user and description information of the at least one risk event are marked. In this manner, the user may select a risk type of interest, and display related information of a corresponding risk event based on the selected risk type.

Different colors are used to mark predicted region ranges corresponding to risk events of different risk levels.

Different colors are used to mark predicted region ranges corresponding to risk events of different risk types.

Different colors are used to mark predicted region range corresponding to risk events of different risk levels. Risk events of different risk levels can be effectively distinguished based on colors. In addition, a distribution of risk events of different risk levels in the map is intuitively displayed.

Different colors are used to mark predicted region range corresponding to risk events of different risk types. Risk events of different risk types can be effectively distinguished based on colors. In addition, a distribution of risk events of different risk types in the map is intuitively displayed.

Optionally, the map data includes first static layer data and first dynamic layer data, and the risk event information is obtained based on the first static layer data and the first dynamic layer data.

Further, map data related to the risk event may be extracted from the first static layer data and the first dynamic layer data. For example, the first static layer data may indicate a road status that does not frequently change, such as a road type, a lane quantity, and road surface pit information (for example, a depth, location information, and an area). For example, the first dynamic layer data may indicate weather conditions that frequently change with time, such as precipitation, snowfall, a visibility, light intensity, a wind direction, a wind force, and a lightning index, and may further indicate a road status that frequently changes, such as road surface construction information (for example, whether there is a construction, a construction location, and construction duration), and road surface cover information (for example, an ice thickness, a water accumulation depth, and a falling leaf quantity).

In the foregoing implementation, the static layer data and the dynamic layer data in the map data make it possible to obtain the risk event information, and the risk event information improves richness of the map data.

Optionally, the storing the risk event information as map data includes: storing the risk event information as second dynamic layer data of the map data.

In the foregoing implementation, the risk event information may be expressed in a form of a dynamic layer of the map, and the dynamic layer that carries the risk event information may be displayed separately, or may be displayed in a superimposed manner with at least one other layer (for example, a dynamic layer that carries only weather information or a static layer) in the map.

Optionally, the risk event information is stored in a data structure corresponding to an identifier of the risk event. The corresponding risk event can be quickly indexed in the map based on the identifier of the risk event.

Optionally, the risk event information is stored in a data structure corresponding to the predicted time range. In this way, risk event information corresponding to any predicted time range may be provided for the user, and delivering the risk event information based on the predicted time range can improve data transmission efficiency.

According to a second aspect, this application provides a map data processing apparatus. The apparatus includes: an obtaining unit, configured to obtain risk event information, where the risk event information includes time information and location information, the time information indicates a predicted time range of a risk event, and the location information indicates a predicted region range of the risk event; and a storage unit, configured to store the risk event information as map data.

Optionally, the apparatus further includes: a planning unit, configured to plan a lowest-risk path based on the risk event information.

Optionally, the apparatus further includes: a first processing unit, configured to recommend the lowest-risk path to a user, or control a vehicle to travel along the lowest-risk path.

Optionally, the apparatus further includes: a second processing unit, configured to recommend a plurality of paths to the user, where the plurality of paths include the lowest-risk path; and a receiving unit, configured to receive feedback information from the user, where the feedback information indicates a path selected by the user from the plurality of paths. The second processing unit is further configured to control the vehicle to travel along the selected path.

Optionally, the planning unit is specifically configured to: plan the lowest-risk path of the vehicle based on the risk event information and a sensing capability of the vehicle; plan the lowest-risk path of the vehicle based on the risk event information and a vehicle type of the vehicle; or plan the lowest-risk path of the vehicle based on the risk event information and an autonomous driving level of the vehicle.

Optionally, the lowest-risk path is a path with no risk event, a path with no risk event whose risk level exceeds a risk threshold, or a path with no risk event of a specific risk type.

Optionally, the planning unit is specifically configured to: plan a plurality of paths; determine that the predicted region range includes a location point in the plurality of paths; estimate that the vehicle travels to the location point at an estimated time; determine, based on the time information and the location information in the risk event information, the predicted time range corresponding to the predicted region range; determine that the predicted time range includes the estimated time; determine a traveling risk of at least one of the plurality of paths based on the risk event; and determine the lowest-risk path in the plurality of paths based on the traveling risk.

Optionally, the obtaining unit is specifically configured to: generate the risk event information, or receive the risk event information.

Optionally, the apparatus is the vehicle, or the apparatus further includes a sending unit that sends the risk event information to the vehicle, where the vehicle satisfies at least one of the following conditions:
the vehicle is in the predicted region range;
a minimum distance between the vehicle and the predicted region range is less than a first threshold;
the predicted region range has an intersection with a planned path of the vehicle;
a minimum distance between the predicted region range and the planned path of the vehicle is less than a second threshold;
a tile to which the predicted region range belongs is a tile on which the vehicle is located; and
the tile to which the predicted region range belongs is a tile that the planned path of the vehicle passes through.

Optionally, the predicted region range is located on a road or a lane in a map.

Optionally, the risk event information further includes at least one of the following content: identification information of the risk event, identification information of a tile to which the risk event belongs, identification information of a road on which the risk event is located, risk level information, risk type information, warning information, identification information of a dynamic element that affects the risk event, and information about a map element that is affected by the risk event. The risk level information indicates a danger degree of the risk event, the risk type information indicates a type of the risk event, and the warning information indicates content with which a driver or a driving system is prompted based on the risk event.

Optionally, the apparatus further includes a third processing unit, configured to: determine that an element that affects the risk event changes, where the element is located at a static layer or a dynamic layer of the map; and update the risk event information or eliminate the risk event information based on the changed element.

Optionally, the apparatus further includes a fourth processing unit, configured to perform road condition monitoring, traffic scheduling, path planning, or vehicle control based on the risk event information.

Optionally, the apparatus further includes a fifth processing unit, configured to: determine that the vehicle is to pass through the predicted region range in which the risk event is located; and control the vehicle to perform at least one of the following operations: changing a lane; adjusting a traveling speed; updating a navigation path; turning on a warning light; and prompting the driver with the risk event.

Optionally, the apparatus further includes a sixth processing unit, configured to: determine, based on road topology information in the map, a road region associated with the predicted region range; and prompt a vehicle in the road region with the risk event, or control a traffic volume of the road region.

Optionally, the apparatus further includes a display unit, and the display unit is configured to present the risk event information on a map display interface in at least one of the following manners:
dynamically displaying a change of the risk event on the interface based on the time information and the location information;
marking a predicted region range of at least one risk event whose risk level at a current time exceeds a threshold in the risk event and description information of the at least one risk event;
marking a predicted region range of at least one risk event related to the navigation path in the risk event and description information of the at least one risk event;
marking a predicted region range of at least one risk event at a time selected by the user and description information of the at least one risk event;
marking a predicted region range of at least one risk event that satisfies a risk type selected by the user and description information of the at least one risk event;
using different colors to mark predicted region ranges corresponding to risk events of different risk levels; and
using different colors to mark predicted region ranges corresponding to risk events of different risk types.

Optionally, the map data includes first static layer data and first dynamic layer data, and the risk event information is obtained based on the first static layer data and the first dynamic layer data.

Optionally, the storage unit is specifically configured to store the risk event information as second dynamic layer data of the map data.

Optionally, the risk event information is stored in a data structure corresponding to an identifier of the risk event.

Optionally, the risk event information is stored in a data structure corresponding to the predicted time range.

According to a third aspect, this application provides an electronic map. The electronic map includes risk event information, the risk event information includes time information and location information, the time information indicates a predicted time range of a risk event, and the location information indicates a predicted region range of the risk event.

The electronic map is a map product, and specifically, may be a map data product that carries the risk event information, for example, a map update data packet; or may be a map application product that loads the risk event information, for example, a map application that may be installed on a vehicle or a portable terminal; or may be a map display product, for example, an electronic navigator, that presents the risk event information in a form of a graph, a text, and/or the like.

Optionally, the risk event information is stored in the electronic map in a data structure of an event.

Optionally, the risk event information is stored in the electronic map as dynamic layer data.

Optionally, the risk event information further includes at least one of the following content: identification information of the risk event, identification information of a tile to which the risk event belongs, identification information of a road on which the risk event is located, risk level information, risk type information, warning information, identification information of a dynamic element that affects the risk event, and information about a map element that is affected by the risk event. The risk level information indicates a danger degree of the risk event, the risk type information indicates a type of the risk event, and the warning information indicates content with which a driver or a driving system is prompted based on the risk event.

According to a fourth aspect, this application provides a map data processing apparatus. The apparatus includes at least one processor and a communication interface, and the communication interface is configured to provide an information input and/or output for the at least one processor. The apparatus is configured to implement the method according to any one of the first aspect or the possible embodiments of the first aspect.

The map data processing apparatus may be a network side device, a road side device, or a terminal.

The network side device may be, for example, a server (for example, an application server or a map server) deployed on a network side, or a component or a chip in the server. The network side device may be deployed in a cloud environment or an edge environment. This is not specifically limited in embodiments of this application. The road side device may be, for example, an apparatus like a road side unit (Road Side Unit, RSU), multi-access edge computing (Multi-Access Edge Computing, MEC), or a sensor, or a component or a chip inside these apparatuses, or may be a system-level device including an RSU and an MEC, or may be a system-level device including an RSU and a sensor, or may be a system-level device including an RSU, an MEC, and a sensor. The terminal may be any device like a vehicle, an intelligent wearable device (for example, a sports band or a watch), or a portable mobile device (for example, a mobile phone or a tablet), or may be an apparatus, a component, or a chip in any one of the foregoing devices, for example, an on board unit (On Board Unit, OBU). This is not specifically limited in embodiments of this application. It should be noted that the map data processing apparatus may be a generation end of the electronic map, or may be a using end of the electronic map. This is not specifically limited herein.

According to a fifth aspect, this application provides a computer-readable storage medium, including computer instructions. When the computer instructions are run by a processor, the method according to any one of the first aspect or the possible implementations of the first aspect is implemented.

According to a sixth aspect, this application provides a computer program product. When the computer program product is executed by a processor, the method according to any one of the first aspect or the possible embodiments of the first aspect is implemented. For example, the computer program product may be a software installation package. When the method provided in any possible design of the first aspect needs to be used, the computer program product may be downloaded and executed on the processor, to implement the method according to any one of the first aspect or the possible embodiments of the first aspect.

According to a seventh aspect, this application provides electronic information. The electronic information carries risk event information, the risk event information includes time information and location information, the time information indicates a predicted time range of a risk event, and the location information indicates a predicted region range of the risk event.

Optionally, the electronic information is a set of electrical, magnetic, or electromagnetic signals, and map information is carried in an electrical, magnetic, or electromagnetic carrier.

According to an eighth aspect, a computer-readable storage medium is provided. The computer-readable storage medium has an information input interface. The information input interface can receive electronic information described in any one of the seventh aspect or the possible implementations of the seventh aspect, and store risk event information carried in the electronic information in the computer-readable storage medium.

According to a ninth aspect, this application provides a vehicle. The vehicle includes the map data processing apparatus according to any one of the second aspect or the possible implementations of the second aspect, or includes the map data processing apparatus according to any one of the fourth aspect or the possible implementations of the fourth aspect.

According to a tenth aspect, this application provides a system. The system includes a first map data processing apparatus and a second map data processing apparatus. The first map data processing apparatus is configured to perform the map data processing method according to any one of the first aspect or the possible implementations of the first aspect when obtaining risk event information is generating the risk event information. The second map data processing apparatus is configured to perform the map data processing method according to any one of the first aspect or the possible implementations of the first aspect when obtaining risk event information is receiving the risk event information.

Technical effects of the second aspect to the tenth aspect are the same as those of the first aspect, and details are not described herein again.

### BRIEF DESCRIPTION OF DRAWINGS

FIG. 1 is a diagram of a scenario according to an embodiment of this application;
FIG. 2 is a diagram of a system architecture according to an embodiment of this application;
FIG. 3 is a flowchart of a map data processing method according to an embodiment of this application;
FIG. 4 is a diagram of expressions of predicted region ranges of some risk events according to an embodiment of this application;
FIG. 5A is a diagram of an expression of risk event information according to an embodiment of this application;
FIG. 5B is a diagram of another expression of risk event information according to an embodiment of this application;
FIG. 6 is a diagram of another expression of risk event information according to an embodiment of this application;
FIG. 7 is a diagram of expressions of risk event information in different predicted time periods according to an embodiment of this application;
FIG. 8 is a flowchart of another map data processing method according to an embodiment of this application;
FIG. 9 is a flowchart of another map data processing method according to an embodiment of this application;
FIG. 10 is a diagram of a path recommendation interface according to an embodiment of this application;
FIG. 11 is a diagram of an interface of a display apparatus according to an embodiment of this application;
FIG. 12 is a diagram of a map display interface according to an embodiment of this application;
FIG. 13 is a diagram of a functional structure of a map data processing apparatus according to an embodiment of this application;
FIG. 14 is a diagram of a functional structure of a map data processing apparatus according to an embodiment of this application; and
FIG. 15 is a diagram of a structure of another map data processing apparatus according to an embodiment of this application.

### DESCRIPTION OF EMBODIMENTS

It should be noted that, in embodiments of this application, prefix words such as "first" and "second" are used only to distinguish between different described objects, and do not constitute any limitation on locations, a sequence, priorities, a quantity, content, or the like of the described objects. For example, if a described object is a "field", ordinal numbers before "fields" in a "first field" and a "second field" do not limit locations or a sequence of the "fields", and "first" and "second" do not limit whether the "fields" decorated by the "first" and the "second" are in a same message, and do not limit a sequence of the "first field" and the "second field". For another example, if a described object is a "level", ordinal numbers before "levels" in a "first level" and a "second level" do not limit priorities of the "levels". For another example, a quantity of described objects is not limited by a prefix word, and may be one or more. A "first device" is used as an example, where a quantity of "devices" may be one or more. In addition, objects decorated by different prefix words may be the same or different. For example, if a described object is a "device", a "first device" and a "second device" may be a same device, devices of a same type, or devices of different types. For another example, if a described object is "information", "first information" and "second information" may be information of same content or information of different content. In conclusion, use of the prefix words used to distinguish between the described objects in embodiments of this application does not constitute a limitation on the described objects. For descriptions of the described objects, refer to the context descriptions in the claims or embodiments, and use of the prefix words should not constitute a redundant limitation.

It should be noted that, in embodiments of this application, a description manner like "at least one (or at least one piece) of a1, a2, ..., and an" is used, including a case in which any one of a1, a2, ..., and an exists alone, and also including a case of any combination of a1, a2, ..., and an. Each case may exist alone. For example, a description manner of "at least one of a, b, and c" includes a case of a single a, a single b, a single c, a combination of a and b, a combination of a and c, a combination of b and c, or a combination of a, b, and c.

For ease of understanding, the following first describes related terms that may be used in embodiments of this application.

A map is a carrier of geographical information. In a map structure, the map includes a plurality of layers (Layer), the layers may be understood as a map dataset, and data in the map dataset is organized in a specified data structure. Data at a map layer can describe map elements from a plurality of sources. Based on time variability of the map elements, the map elements may be classified into two types: an element and an event. The element is a map element that is fixed, has a small change, or has a long update period, for example, a road topology, a building location, a lane line, a lane direction, or a traffic infrastructure layout. The event is a map element with a strong time-varying characteristic, for example, a traffic accident, a weather change, road icing, or a road construction or traffic congestion status.

In a map, an element and an event may be recorded at different layers. For example, information about the element is carried by a static layer in the map, and information about the event is carried by a dynamic layer in the map. The map may include one or more static layers, and may further include one or more dynamic layers. For example, a map includes one static layer and a plurality of dynamic layers. The static layer records a geographical distribution of buildings, roads, trees, traffic lights, and road signs. A dynamic layer 1 records a real-time speed limit status, a traffic construction status, and a passenger and vehicle flow status of a lane. A dynamic layer 2 records a weather condition, for example, a sunny day, a rainy day, a snowy day, a windy day, a temperature, or humidity. A map description object may have both a time-varying map element and a non-time-varying map element. The non-time-varying map element refers to a map element that is fixed, has a small change, or has a long update period. In other words, the description object is related to both an element in the map and an event in the map. For example, for a lane, a geographical location of the lane is an element in the map, a traffic volume of the lane is an event in the map, a speed limit of the lane is an event in the map, and an allowed-pass time period of the lane is an event in the map. For a traffic light, a location of the traffic light at an intersection is an element in the map, and a light-on change of the traffic light is an event in the map.

Data at a static layer of a map may be referred to as an element or a static element, and data at a dynamic layer of the map may be referred to as an event or a dynamic element.

In embodiments of this application, a risk event is an event that affects traveling (or driving) safety or traveling smoothness of a vehicle. In other words, the risk event is an event that has potential impact on the traveling (or driving) safety or the traveling smoothness of the vehicle. Each risk event has corresponding time information and location information, where the time information indicates a predicted time range of the risk event, and the location information indicates a predicted region range of the risk event. The predicted time range is a predicted time range in which the risk event may occur, and is not necessarily a time range in which the risk event actually occurs. Similarly, the predicted region range is a predicted region range in which the risk event may occur, and is not necessarily a range in which the risk event actually occurs. The risk event is a risk event that is predicted to have a possibility of occurrence, and may actually occur or may not actually occur. In addition, the predicted time range may be a future time range, so that risk event information may be provided for a traveler in advance for better travel planning. Alternatively, the predicted time range may include a time range of a current time point and a future time point, or may even include a past time point.

For example, a risk event 1 indicates that a region range A in the map is risky in a time period 9:00 to 10:00, where 9:00 to 10:00 is a predicted time range of the risk event 1, and the region range A is a predicted region range of the risk event 1. In some possible embodiments, there are different types of risk events, for example, a lane change collision, a slip collision, a visibility reduction, and a braking distance reduction. It may be understood that different types of risk events correspond to different risks.

Road network structure data in the map may be classified into a tile level, a road level, and a lane level. Each tile in the map has a unique tile identifier (Identifier, ID), each tile includes a plurality of roads, each road has a unique road ID, each road includes a plurality of lanes, and each lane has a unique lane ID. The tile may be understood as follows: A map within a specific range is cut into several rows and columns of rectangular raster pictures based on a specific size and format and different map resolutions, and the rectangular raster picture obtained through cutting is referred to as a tile (Tile).

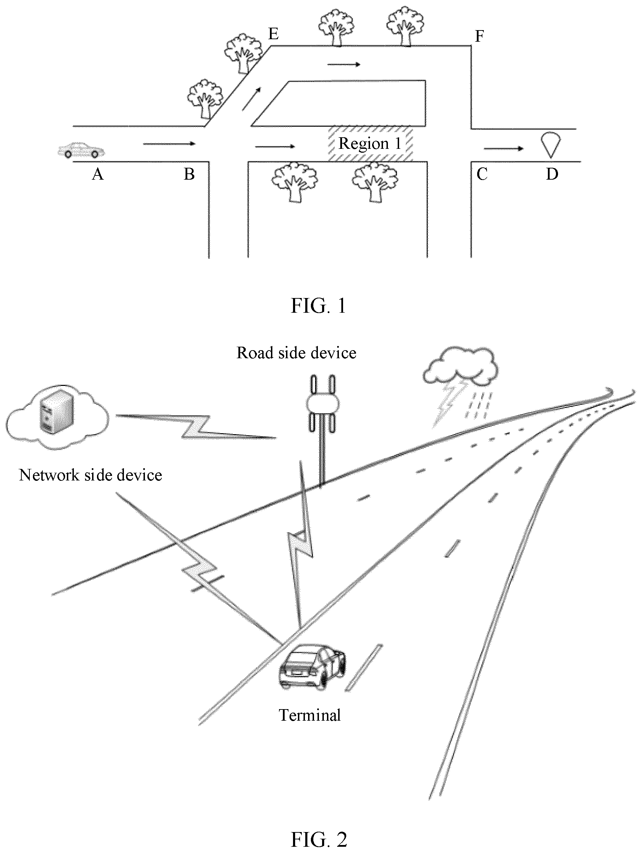

FIG. 1 is a diagram of an application scenario according to an embodiment of this application. In FIG. 1, it is assumed that a current moment is 14:00, and a vehicle intends to arrive at a location D from a location A. During path planning, a vehicle-mounted map indicates that an accident-prone region 1 exists in a road section BC and needs to be bypassed as much as possible. Therefore, the vehicle determines that a traveling path is A→B→E→F→C→D. Compared with a path A→B→C→D, the path needs to take half an hour more. However, actually, a probability that an accident occurs in the region 1 is high only in a specific time period 9:30 to 11:00 on a current day, and the region 1 is safe in other time periods on the current day. In other words, when the current moment is 14:00, the region 1 is safe, and an optimal path that is planned for the vehicle needs to be the path A→B→C→D. It can be learned from this that, because map information is missing or incomplete, the vehicle cannot make an optimal driving decision, and driving decision accuracy is reduced. Consequently, vehicle travel efficiency is reduced.

For the foregoing problem, embodiments of this application provide a map data processing method, so that prediction information of a risk event that may occur in a specific geographical region range can be provided for a vehicle, and the vehicle can obtain a predicted time range and a predicted region range that correspond to the risk event. This helps improve driving safety and driving decision accuracy, thereby improving vehicle travel efficiency.

The following describes technical solutions of this application with reference to the accompanying drawings.

FIG. 2 is an example of a diagram of a system architecture according to an embodiment of this application. The system is used to generate or use an electronic map, where the electronic map includes risk event information, and the risk event information includes location information of a risk event and time information of the risk event. As shown in FIG. 2, the system includes at least one of a network side device, a road side device, and a terminal. The terminal may separately communicate with the network side device and the road side device in a wireless manner, and the network side device may communicate with the road side device in a wireless or wired manner.

The electronic map may be generated by any one of the network side device, the road side device, or the terminal.

The network side device may be a device having a computing function, for example, may be a server (for example, an application server or a map server) deployed on a network side, or a component or a chip in the server. The network side device may be deployed in a cloud environment, that is, may be a cloud computing server. Alternatively, the network side device may be deployed in an edge environment, that is, may be an edge computing server. The network side device may be an integrated device, or may be a plurality of devices that are in a distributed manner. This is not specifically limited in embodiments of this application.

The road side device includes an apparatus like a road side unit (Road Side Unit, RSU), multi-access edge computing (Multi-Access Edge Computing, MEC), or a sensor. For example, the road side device may be an RSU, an MEC, or a sensor, or may be a system including an RSU and an MEC, or may be a system including an RSU and a sensor, or may be a system including an RSU, an MEC, and a sensor.

The terminal may be, for example, any device like a vehicle, an intelligent wearable device (for example, a sports band or a watch), or a portable mobile device (for example, a mobile phone or a tablet), or may be an apparatus, a component, or a chip in any one of the foregoing devices, for example, an on board unit (On Board Unit, OBU). This is not specifically limited in embodiments of this application.

In an implementation, when the electronic map is generated by the network side device, the network side device may obtain the risk event information based on a base map (including a static layer and a dynamic layer) and an artificial intelligence model. The artificial intelligence model is obtained through training based on historical accident data. The historical accident data includes an occurrence time period of a historical accident, an accident region, a risk level, environment information of the accident region in the occurrence time period, road status information of the accident region, and the like. In some possible embodiments, when the network side device detects, based on a data source device (for example, at least one of a road surface monitoring apparatus, the road side device, the terminal, and the like), that an element that affects the risk event changes, the network side device may further update the risk event information based on the changed element. The base map may be a high-precision map, a standard-precision map, or another type of map. This is not specifically limited in embodiments of this application. In some possible embodiments, the data source device may be, for example, a device used by a traffic management department to provide traffic road condition data. In this case, the network side device may be used as a publisher of the electronic map, and the terminal or the road side device may be used as a receiver and a user of the electronic map.

The terminal and the road side device also have an information obtaining capability and a computing capability. Therefore, in addition to being the receiver and the user of the electronic map, the terminal or the road side device may also be used as a producer or updater of the electronic map to locally generate the risk event information, so that the terminal or the road side device can use the risk event information or send the risk event information to another device.

For example, the terminal is used as the producer of the electronic map. The terminal may be a device or an apparatus like a vehicle or an on board unit (On Board Unit, OBU). In this case, the terminal stores the base map. The terminal may obtain, from the base map based on current location information of the terminal and/or planned trajectory information of the terminal, map data related to a risk event at a location or within a specific geographical region range, for example, environment prediction information or road status information, and generate, with reference to the artificial intelligence model, an electronic map that includes information about the risk event within the specific geographical region range, for use by the terminal or for use by another device.

When the electronic map is published, the network side device may publish the electronic map to the terminal through a wireless network, for example, a cellular communication network; or the network side device may publish the electronic map to another device, and the another device forwards the electronic map to the terminal. The forwarding may be performed through V2X (Vehicle to Everything, vehicle to everything). For example, a map server on a cloud publishes the electronic map to a portable terminal held by a pedestrian or a vehicle, where the electronic map may be published through a cellular communication network including a base station, and the road side device may further forward the electronic map to the portable terminal or the vehicle through V2X communication. Alternatively, the producer of the electronic map is the road side device or the terminal, and the electronic map may be published by the road side device or the terminal through V2X.

Because the risk event is related to a dynamic element in an ambient environment, when a status of the associated dynamic element changes, an update of the risk event information may be correspondingly triggered.

In the foregoing system, communication between the network side device and the terminal, between the terminal and the road side device, and between the network side device and the road side device may use a cellular communication technology, for example, 2G cellular communication, such as a global system for mobile communications (global system for mobile communications, GSM) and a general packet radio service (general packet radio service, GPRS); 3G cellular communication, such as wideband code division multiple access (wideband code division multiple access, WCDMA), time division-synchronous code division multiple access (time division-synchronous code division multiple access, TD-SCDMA), and code division multiple access (code division multiple access, CDMA); 4G cellular communication, for example, long term evolution (long term evolution, LTE); 5G cellular communication; or another evolved cellular communication technology. A wireless communication system may alternatively communicate with a wireless local area network (wireless local area network, WLAN) by using a non-cellular communication technology, for example, Wi-Fi. In some embodiments, the devices may alternatively directly communicate with each other through an infrared link, Bluetooth, or ZigBee. In some embodiments, the devices may alternatively communicate with each other by using another wireless protocol, for example, various vehicle communication systems. For example, the system may include one or more dedicated short-range communications (dedicated short-range communications, DSRC) devices, and these devices may include public and/or private data communication between vehicles and/or road side stations. This is not specifically limited in this application.

It should be noted that FIG. 2 is merely an example of an architectural diagram, but a quantity of network elements included in the system shown in FIG. 2 is not limited. Although not shown in FIG. 2, another functional entity may further be included in FIG. 2 in addition to the functional entities shown in FIG. 2. In addition, the method provided in embodiments of this application may be applied to the communication system shown in FIG. 2. Certainly, the method provided in embodiments of this application may also be applied to another communication system. This is not limited in embodiments of this application.

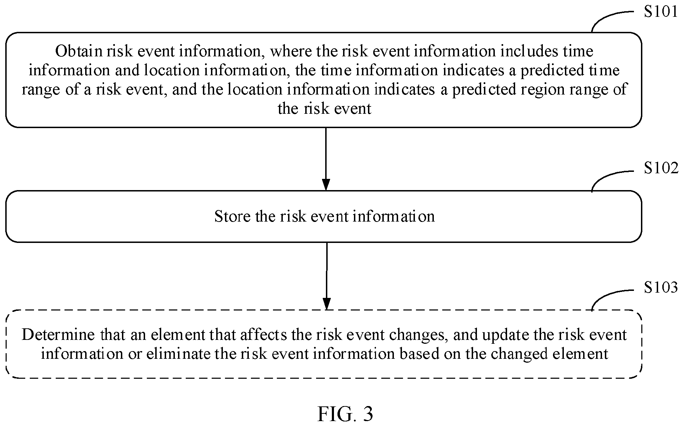

FIG. 3 is a flowchart of a map data processing method according to an embodiment of this application. The method may be applied to the foregoing described system architecture. The method includes but is not limited to the following steps.

S101: Obtain risk event information, where the risk event information includes time information and location information, the time information indicates a predicted time range of a risk event, and the location information indicates a predicted region range of the risk event.

In embodiments of this application, the obtaining risk event information is specifically: generating the risk event information. In this case, the method described in embodiments of FIG. 3 may be used for generation of a map that includes the risk event information. The method includes but is not limited to being performed by a device, a component, a chip, a software module, or a hardware module on a network side device side (for example, a server side), a road side device side, or a terminal side. The terminal side device includes but is not limited to a vehicle or a portable terminal.

Alternatively, in embodiments of this application, the obtaining risk event information is specifically: receiving the risk event information. In this case, the method described in embodiments of FIG. 3 may be used for use or storage of a map that includes the risk event information. The method includes but is not limited to being performed by a device, a component, a chip, a software module, or a hardware module on a server side, a road side device side, or a terminal side. The terminal side device includes but is not limited to a vehicle or a portable terminal.

In embodiments of this application, the predicted time range of the risk event is a predicted time range in which the risk event may occur, and is not necessarily a time range in which the risk event actually occurs. The predicted time range of the risk event may be a time period. The time period may be represented based on a start moment of the risk event and an end moment of the risk event, or may be represented based on a start moment and duration of the risk event. This is not specifically limited herein.

For example, the predicted time range of the risk event may be one or two hours from a current moment, or may be a specific time period, for example, 9:00 AM to 10:00 AM. Duration of the predicted time range is not specifically limited in embodiments of this application.

In embodiments of this application, the predicted region range of the risk event is a predicted region range in which the risk event may occur, and is not necessarily a region range in which the risk event actually occurs. The predicted region range may be coordinate values obtained based on any coordinate system, for example, corresponding three-dimensional coordinates including a longitude, a latitude, and an altitude in the world geodetic system 1984 (Word Geodetic System 1984, WGS84), or three-dimensional coordinates including an X coordinate, a Y coordinate, and a Z coordinate in a natural coordinate system, or three-dimensional coordinates including an S coordinate, a D coordinate, and an H coordinate in a road coordinate system, or coordinates in another coordinate system.

The predicted region range of the risk event may be specifically represented in the following plurality of manners. In a specific implementation, when the predicted region range is of a regular shape, the predicted region range may be represented by using one or more parameters relative to a reference point (for example, a start point of a lane or a road), such as a distance and coordinates. For example, a road-level representation may be used for the predicted region range. To be specific, the predicted region range is located on a road in the map, a reference point is a start point of the road, and (a, b) is an interval expression of a road segment on which the predicted region range is located. Alternatively, the predicted region range is represented by using geographical coordinates of two endpoints of the road segment. In some possible embodiments, a lane-level representation may alternatively be used for the predicted region range. In other words, the predicted region range is located on a lane in the map. In another specific implementation, when the predicted region range is of an irregular shape, the predicted region range may be represented by using geographical coordinates of a plurality of corner points of the irregular shape. Alternatively, a minimum circumscribed rectangle or a minimum circumscribed circle of the predicted region range is used for a geometric location expression.

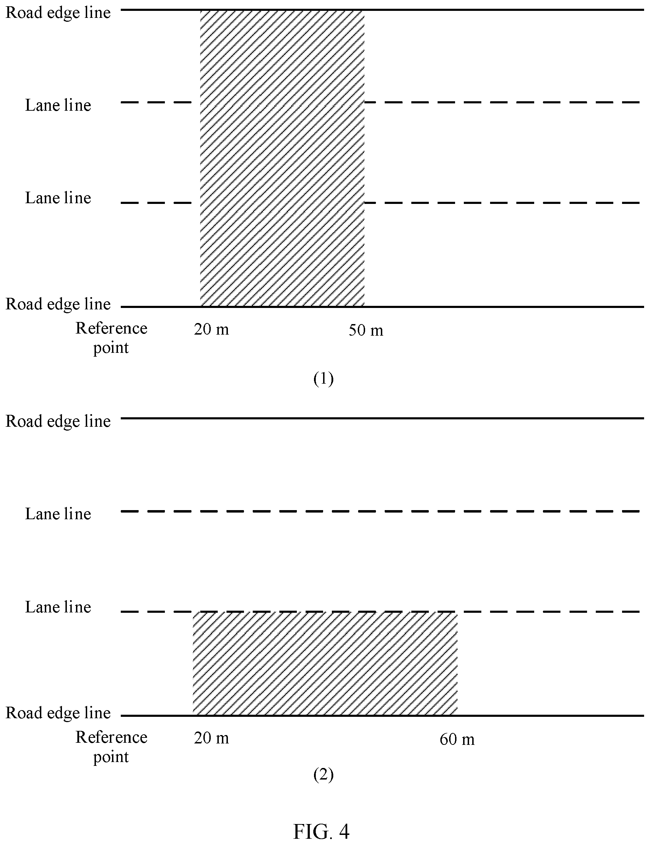

(1) in FIG. 4 is a diagram of a road-level geometric expression of the predicted region range of the risk event. In (1) in FIG. 4, when the predicted region range is located on a road in the map, a start point of the road may be used as a reference point, and (20 m, 50 m) indicates that the predicted region range starts from a location that is 20 meters away from the reference point and ends at a location that is 50 meters away from the reference point.

(2) in FIG. 4 is a diagram of a lane-level geometric expression of the predicted region range of the risk event. In (2) in FIG. 4, when the predicted region range is located on a lane in the map, a start point of the lane may be used as a reference point, and (20 m, 60 m) indicates that the predicted region range starts from a location that is 20 meters away from the reference point and ends at a location that is 60 meters away from the reference point.

In some possible embodiments, the risk event information further includes at least one of the following content: identification information of the risk event, identification information of a tile to which the risk event belongs, identification information of a road on which the risk event is located, risk level information, risk type information, warning information, identification information of a dynamic element that affects the risk event, and information about a map element that is affected by the risk event.

In a specific implementation, the risk event information further includes the risk level information, and the risk level information indicates a danger degree of the risk event. It should be noted that the risk level information is optional information of the risk event information. Risk degrees of risk events are quantified in levels based on the risk level information, to effectively distinguish between risk events of different danger degrees. This helps distinguish between priorities, and improves efficiency of responding to the risk event.

For example, the danger degrees may be divided into three levels: a high risk, a medium risk, and a low risk. In some possible embodiments, the danger degrees may alternatively be divided into four levels: a high risk, a medium risk, a low risk, and no risk, or may be divided in another manner. This is not specifically limited in embodiments of this application.

The risk level information may indicate the danger degree of the risk event by using bit mapping, a binary value, or another manner. For example, when the risk level information is a first risk value, it indicates that the danger degree of the risk event is a high risk; when the risk level information is a second risk value, it indicates that the danger degree of the risk event is a medium risk; or when the risk level information is a third risk value, it indicates that the danger degree of the risk event is a low risk.

Refer to Table 1. Table 1 provides an example of a mapping table between a risk value and a danger degree of a risk event. It can be learned from Table 1 that, when the risk value is 1, it indicates that the danger degree of the risk event is a low risk; when the risk value is 2, it indicates that the danger degree of the risk event is a medium risk; and when the risk value is 3, it indicates that the danger degree of the risk event is a high risk. It can be learned from Table 1 that a higher risk value indicates a more dangerous risk event.

**Table 1**

| Risk value | Danger degree of a risk event |
|---|---|
| 1 | Low risk |
| 2 | Medium risk |
| 3 | High risk |

It may be understood that Table 1 is merely used as an example to reflect a correspondence between a risk value and a danger degree of a risk event. In actual application, text content and a storage manner of the correspondence may alternatively be in another form. This is not specifically limited herein.

In another specific implementation, the risk event information further includes the risk type information, and the risk type information indicates a type of the risk event. It should be noted that the risk type information is optional information of the risk event information. A type of a risk that may be faced can be quickly determined based on the risk type information, to better cope with the risk event.

For example, the type of the risk event includes but is not limited to a lane change collision, a turning collision, a slip collision, a visibility reduction, a braking distance reduction, and the like.

For example, the risk type information may be obtained by classifying and describing the risk event based on a reason for generating the risk event, for example, a risk event with a low visibility, a risk event of road slipping, or a risk event of road narrowing; or may be obtained by classifying and describing the risk event based on a result caused by the risk event, for example, a congestion risk event, a scratch risk event, a tail risk event, a cliff risk event, or a risk event of ramping difficulty. There are a plurality of specific classification manners. This is not limited in embodiments of this application.

In another specific implementation, the risk event information further includes the identification information of the dynamic element that affects the risk event. It should be noted that the identification information of the dynamic element that affects the risk event is optional information of the risk event information. The dynamic element associated with the risk event can be quickly indexed based on the identification information of the dynamic element that affects the risk event. When it is detected that the associated dynamic element changes, the risk event information can be updated based on the changed dynamic element in a timely manner. This helps improve accuracy of the risk event information.

That the risk event is affected by the dynamic element includes but is not limited to: The dynamic element causes generation of the risk event, or the dynamic element increases or decreases the danger degree of the risk event. It should be noted that the risk event has the corresponding predicted time range, and this indicates that the risk event is affected by the dynamic element within the predicted time range. However, whether the risk event is associated with the dynamic element outside of the predicted time range is not specifically limited in embodiments of this application.

For example, the dynamic element that affects the risk event may be at least one of dynamic elements such as road surface icing, road construction, heavy fog weather, snowstorm weather, rainstorm weather, road congestion, road access forbidding, road surface collapse, mountain landslide, and road surface maintenance. This is not specifically limited herein.

In addition, the identification information of the dynamic element is used to uniquely identify the dynamic element in the map. The identification information of the dynamic element may be a combination of one or more characters, and the character may be one or more of a number, a letter, and another symbol. For example, the identification information of the dynamic element is a combination of one or more numbers, or a combination of one or more pieces of data and letters.

In another specific implementation, the risk event information further includes the information about the map element that is affected by the risk event. It should be noted that the information about the map element that is affected by the risk event is optional information of the risk event information. The map element that is affected by the risk event can be quickly indexed based on the information about the map element, and when the risk event changes, a linkage update of the information about the map element that is affected by the risk event can be implemented. This not only improves accuracy of the map data, but also improves update efficiency of the map data.

For example, the map element may be an element at a static layer, for example, a road, a lane, or an intersection, or may be an event at a dynamic layer, for example, a speed limit value of a road, a time period of a road speed limit, confidence of a time period, a road passing time period, a road construction time period, and a spanability of a lane line. That the map element is affected by the risk event means that the risk event causes temporary and dynamic changes of some map elements. For example, a risk event 1 changes a speed limit value of a road 1, or a risk event 1 prolongs duration of a speed limit time period of a road 2, or a risk event 1 adds speed limit information to a lane.

In another specific implementation, the risk event information further includes the warning information. The warning information indicates content with which a driver or a driving system is prompted based on the risk event. It should be noted that the warning information is optional information of the risk event information. Based on the warning information, the driver or the driving system may be prompted to pay attention to and avoid, as much as possible, the predicted region range corresponding to the risk event ahead. This improves traveling safety of the vehicle.

For example, the warning information may be risk prompt information similar to "The region a has a risk in the predicted time period 1. Drive with caution", or may be detour suggestion information similar to "The region a is dangerous in the predicted time period 1. Avoid the region as much as possible", or may be other information that can be used to warn the risk event. This is not specifically limited in embodiments of this application.

In some possible embodiments, the risk event information further includes at least one of the identification information of the risk event, the identification information of the tile to which the risk event belongs, and the identification information of the road on which the risk event is located. It should be noted that the identification information of the risk event, the identification information of the tile to which the risk event belongs, and the identification information of the road on which the risk event is located are all optional information of the risk event information.

The identification information of the risk event is used to identify the risk event in the map, the identification information of the tile is used to identify the tile in the map, and the identification information of the road is used to identify the road in the map.

In addition, the risk event is associated with an identifier of the map tile, so that the risk event can be quickly indexed based on the identifier of the map tile. The risk event is associated with a road identifier, so that the risk event can be quickly indexed based on the road identifier. In this way, efficiency of searching for the risk event and efficiency of releasing the risk event information are effectively improved.

It should be noted that the identification information of the risk event, the identification information of the tile, or the identification information of the road may be a combination of one or more characters, and the character may be one or more of a number, a letter, and another symbol. For example, the identification information of the risk event, the identification information of the tile, or the identification information of the road is a combination of one or more numbers, or a combination of one or more pieces of data and letters.

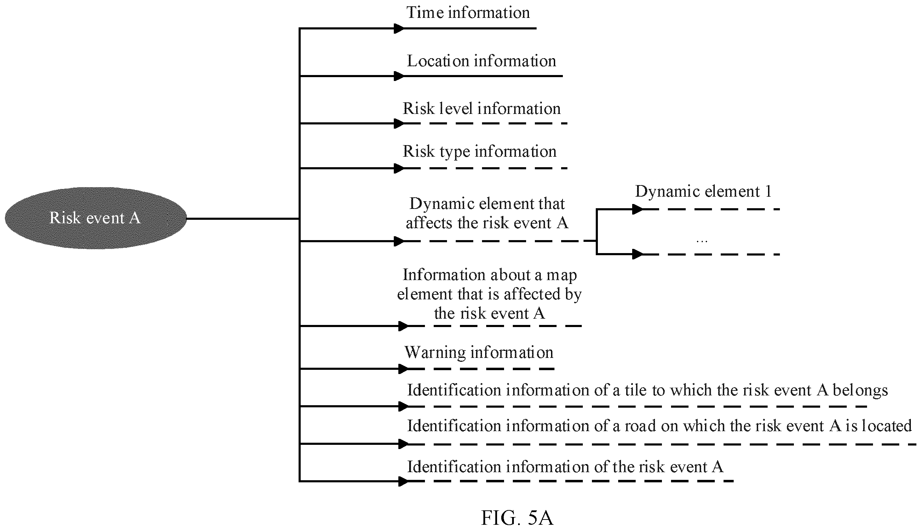

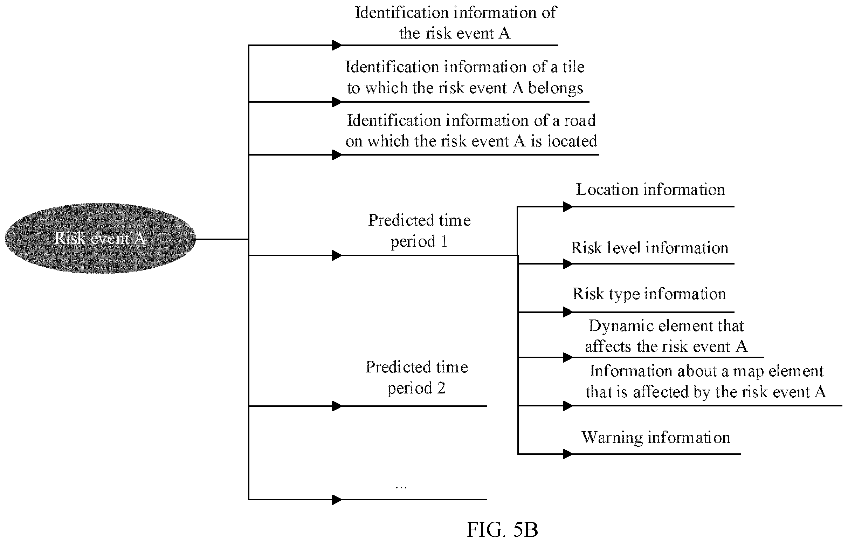

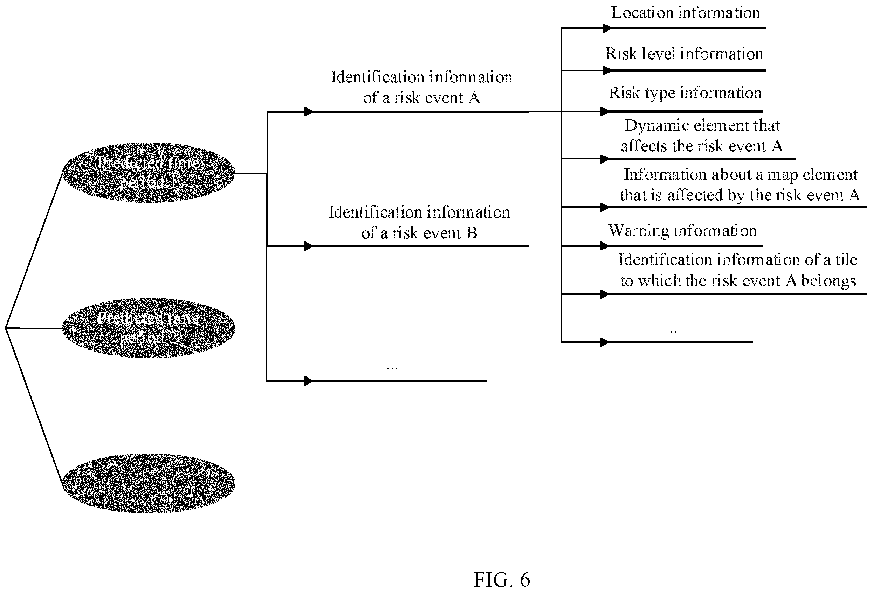

In embodiments of this application, two expressions of the risk event information are provided as an example. In a first manner, the risk event information is stored, in a form of an event, in a data structure corresponding to an identifier of the risk event. In a second manner, the risk event information is stored, in a form of a time period, in a data structure corresponding to the predicted time range. It should be noted that the following expressions shown in FIG. 5A, FIG. 5B, and FIG. 6 are for reference only, and do not indicate that the risk event information can be stored only in the data structures shown in the figures. The following describes the two expressions in detail.

### Method 1: in the form of an event

FIG. 5A is a diagram of an expression of the risk event information according to an embodiment of this application. In FIG. 5A, a risk event A is used as an example to describe a representation of risk event information of the risk event A. It can be learned that the risk event information includes time information and location information of the risk event A. In some possible embodiments, the risk event information further includes at least one of risk level information of the risk event A, risk type information, a dynamic element that affects the risk event A, information about a map element that is affected by the risk event A, warning information, identification information of a tile to which the risk event A belongs, identification information of a road on which the risk event A is located, and identification information of the risk event A. For details of each piece of information shown in FIG. 5A, refer to descriptions of related content in the foregoing embodiments. For brevity of the specification, details are not described herein again.

It should be noted that the expression of the risk event information shown in FIG. 5A is merely used as an example, and composition content and a data structure of the risk event information are not limited in embodiments of this application. In the foregoing example, each of the eight types of content other than the time information and the location information in the risk event information is not necessarily included in the risk event information, that is, may be selectively included in the risk event information according to an actual application requirement.

In embodiments of this application, the risk event may also dynamically change with time. In this case, the risk event information may also include specific information of the risk event in different time periods. FIG. 5B is a diagram of another expression of the risk event information, and is also another example of specific content of the risk event information. In FIG. 5B, the risk event A is still used as an example to describe the risk event information of the risk event A. It can be learned that the risk event information includes specific information of the risk event A in at least one time period (for example, a predicted time period 1 and a predicted time period 2). The predicted time period 1 is used as an example. Specific information about the risk event A in the predicted time period 1 includes location information, risk level information, risk type information, a dynamic element that affects the risk event A, information about a map element that is affected by the risk event A, warning information, and the like of the risk event A in the predicted time period 1. In addition, the risk event information further includes the identification information of the risk event A, the identification information of the tile to which the risk event A belongs, and the identification information of the road on which the risk event A is located. For details of the information shown in FIG. 5B, refer to related descriptions in the foregoing embodiments. Details are not described herein again.

It may be understood that an ID of a same risk event in different time periods is unchanged. Therefore, the ID of the risk event remains unchanged. However, because a status of the risk event may change with time, at least one of location information, risk level information, risk type information, identification information of a dynamic element that affects the risk event, information about a map element that is affected by the risk event A, and warning information that correspond to the risk event in different time periods may be different.

A predicted status of the risk event in different time periods is specifically described by using an example. It is assumed that when the risk event A is in the predicted time period 1 (that is, in the future one hour), the location information is a predicted region range 1, the risk level information indicates a high risk, dynamic elements that affect the risk event A include a road surface ice element 1 and a road construction element 2, and an ice thickness of the road surface ice element 1 in the predicted time period 1 is 5 cm. It is assumed that when the risk event A is in the predicted time period 2 (that is, in the future one or two hours), the location information is still the predicted region range 1, but the risk level information indicates a low risk, a dynamic element that affects the risk event A is the road surface ice element 1, and an ice thickness of the road surface ice element 1 in the predicted time period 2 is 1 cm. It can be learned from this that the dynamic element associated with the predicted time period 2 is different from the dynamic element associated with the predicted time period 1. Specifically, an attribute status of the road surface ice element 1 changes, and the road construction element 2 disappears after the predicted time period 1 ends. In addition, the risk level information in the predicted time period 2 is also different from the risk level information in the predicted time period 1.

### Method 2: in the form of a time period

In embodiments of this application, the risk event information may alternatively be represented in a form of a predicted time period range.

FIG. 6 is a diagram of another expression of the risk event information according to an embodiment of this application. In FIG. 6, the risk event information is stored in a form of a predicted time period. For example, risk event information of a risk event A is stored in a data structure corresponding to a predicted time period 1. The risk event information of the risk event A includes identification information of the risk event A, location information corresponding to the risk event A in the predicted time period 1, risk level information, risk type information, a dynamic element that affects the risk event A, information about a map element that is affected by the risk event A, warning information, identification information of a tile to which the risk event A belongs, and the like. In some possible embodiments, if a status of the risk event A changes with time, event-related information of the risk event A in different time periods may be stored in data structures of the corresponding time periods. For example, in FIG. 6, event-related information of the risk event A in a predicted time period 2 may be stored in a storage structure corresponding to the predicted time period 2.

In some possible embodiments, a data structure corresponding to each predicted time period may store risk event information of at least one risk event. For example, in the data structure corresponding to the predicted time period 1 in FIG. 6, in addition to the risk event information of the risk event A, risk event information of another risk event, for example, risk event information of a risk event B, may be further stored. For detailed content of the risk event information of the risk event B, refer to the risk event information of the risk event A. For brevity of the specification, details are not described herein again.

In some possible embodiments, to display risk event information in different time periods more intuitively and clearly, the risk event information in the different time periods may be represented in a form of a map layer. For example, the risk event information in the different time periods may be represented in a form of different dynamic layers of a map.

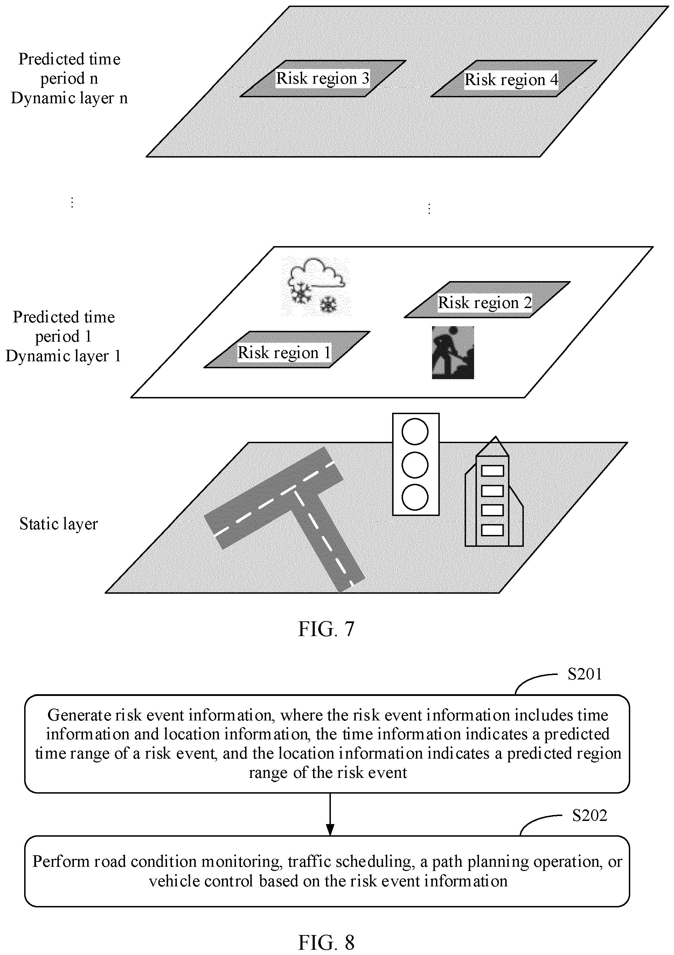

FIG. 7 is a diagram of a dynamic layer that carries risk event information in different time periods according to an embodiment of this application. It can be learned that the map data shown in FIG. 7 includes a static layer and dynamic layers corresponding to predicted time periods. The static layer includes information such as a road topology, a building location, a lane line, a lane direction, or a traffic infrastructure layout. The dynamic layers corresponding to the time periods include a dynamic layer 1 corresponding to the predicted time period 1, a dynamic layer 2 corresponding to the predicted time period 2, ..., and a dynamic layer n corresponding to a predicted time period n. The dynamic layer 1 corresponding to the predicted time period 1 is used as an example to specifically describe specific content of the dynamic layer 1. The dynamic layer 1 includes a risk event 1 and a risk event 2. A predicted region range of the risk event 1 is a region range indicated by a risk region 1, and a predicted region range of the risk event 2 is a region range indicated by a risk region 2. Based on FIG. 7, it can be further learned that the dynamic layer 1 may further include a dynamic element associated with the risk event 1, for example, a snowstorm weather element, and a dynamic element associated with the risk event 2, for example, a road construction element.

It should be noted that the dynamic layer corresponding to the predicted time period shown in FIG. 7 carries both location information of the risk event and a dynamic element that affects the risk event. In some possible embodiments, some information (including location information, risk level information, risk type information, and the like) of the risk event and the dynamic element associated with the risk event may alternatively be located at different dynamic layers. This is not specifically limited in embodiments of this application.

In addition, the dynamic layers corresponding to the predicted time periods shown in FIG. 7 are merely an example. In actual application, the dynamic layer corresponding to each predicted time period may be separately displayed; or dynamic layers corresponding to a plurality of predicted time periods may be simultaneously displayed, as shown in FIG. 7; or a dynamic layer that carries risk event information and another layer of the map are displayed in a superimposed manner. For example, in FIG. 7, the dynamic layer 1 and the static layer are displayed in a superimposed manner, or the dynamic layer that carries the risk event information and a dynamic layer that carries only weather information are displayed in a superimposed manner, or the dynamic layer that carries the risk event information, a dynamic layer that carries road environment information, a dynamic layer that carries only weather information, and the static layer are displayed in a superimposed manner. In embodiments of this application, a quantity of map layers that can be superimposed is not limited, and a type of a map layer that can be superimposed is not limited.

In embodiments of this application, the risk event information is obtained based on static layer data in the map data and dynamic layer data in the map data. In a specific implementation, map data related to a risk event may be extracted from the static layer data and the dynamic layer data, for example, environment information and/or road status information in a time period. The environment information includes but is not limited to weather parameters such as precipitation, snowfall, a visibility, light intensity, a wind direction, a wind force, and a lightning index. The road status information includes but is not limited to information indicating a road status such as a road type, a lane quantity, road surface construction information (for example, whether there is construction, a construction location, and construction duration), road surface pit information (for example, a depth, location information, and an area), and road surface cover information (for example, an ice thickness, a water accumulation depth, and a falling leaf quantity). Prediction is performed based on the map data related to the risk event to obtain the risk event information. It should be noted that there are a plurality of road types. For example, roads may be classified into national roads, provincial roads, county roads, and township roads based on road administrative levels, and may be classified into highways, first-class roads, second-class roads, third-class roads, and the like based on road use tasks, functions, and traffic volumes. Alternatively, there may be another classification manner. This is not specifically limited herein.

In embodiments of this application, based on different types of risk events, static layer data and dynamic layer data that are used to obtain the risk event information are also different. The type of the risk event includes but is not limited to a lane change collision, a turning collision, a slip collision, a visibility reduction, a braking distance reduction, and the like.

For example, when the type of the risk event is a lane change collision, the static layer data specifically includes real and virtual information of a lane line, location information of a lane line of a dashed line type, location information of a crossroad, location information of a road obstacle, and the like; and the dynamic layer data includes road construction information, traffic accident information, bad weather information (for example, rainstorm and snowstorm), and the like.

For another example, when the type of the risk event is a brake distance reduction, map data used to obtain the risk event information is mainly the dynamic layer data. The dynamic layer data specifically includes at least one of information that describes a road surface coverage status, such as road surface ice information, road surface water information, and a road surface falling leaf thickness, and bad weather information such as rainstorm and snowstorm weather.

For example, a process of obtaining the risk event information may be specifically: obtaining environment information and/or road status information of a target geographical region in a predicted time period from the static layer data and/or the dynamic layer data of the map, where the target geographical region includes the predicted region range, and the predicted time period includes the predicted time range. The environment information and the road status information of the target geographical region in the predicted time period are input into an artificial intelligence model for prediction, and the time information and the location information of the risk event are output. It should be noted that the time information of the risk event is a time range that is predicted based on an input parameter (for example, the environment information and/or the road status information) and in which the risk event may occur, and the location information of the risk event is a region range that is predicted based on the input parameter and in which the risk event may occur. In some possible embodiments, the artificial intelligence model may further output at least one of the risk level information and the risk type information of the risk event. Further, with reference to the time information, the location information, the risk level information, and the risk type information that are of the risk event and the description information of the map element in the map, the dynamic element that affects the risk event may be determined, and the information about the map element that is affected by the risk event may be obtained. The source data used to generate the risk event information is not limited to data in the map, and may be information received from the road side device or information (including environment information and/or vehicle status information) sensed by the vehicle. The data type and the data source for generating the risk event information are not limited in embodiments of this application.

The artificial intelligence model is pre-trained, and may be continuously optimized in a subsequent use process. For example, the artificial intelligence model may be a random forest (Random Forest, RF), a support vector machine (Support Vector Machine, SVM) model, a neural network model, or another prediction algorithm. This is not specifically limited in this application.

For example, the artificial intelligence model is obtained through training based on historical accident data. The historical accident data includes an occurrence time period of a historical accident, an occurrence region of the historical accident, a risk level, a risk type, historical environment information of the historical accident in the occurrence time period, and historical road status information. The historical accident data may be provided by the traffic management department. For example, the risk level may be evaluated based on a collision degree of a historical accident, a casualty status, and the like.

For example, a training process of the artificial intelligence model may be specifically as follows: An accident 1 is used as an example. It is assumed that an occurrence time period of the accident 1 is a time period 1 and an occurrence region is a region 1. A risk level of the accident 1 is used as a risk level truth value of the accident 1, and a risk type of the accident 1 is used as a risk type truth value of the accident 1. Historical environment information and historical road status information that correspond to the accident 1 are input to the artificial intelligence model for prediction. The artificial intelligence model outputs a predicted time range that is a time period 2, a predicted region range that is a region 2, a predicted risk level, and a predicted risk type. A location prediction error of the accident 1 is obtained based on location information of the region 1 and location information of the region 2, a time period prediction error of the accident 1 is obtained based on the time period 1 and the time period 2, a risk level prediction error of the accident 1 is obtained based on the predicted risk level and the risk level truth value corresponding to the accident 1, and a risk type prediction error of the accident 1 is obtained based on the predicted risk type and the risk type truth value of the accident 1. A parameter of the artificial intelligence model is adjusted based on at least one of the location prediction error, the time period prediction error, the risk level prediction error, and the risk type prediction error, until a prediction error of the artificial intelligence model is less than or equal to a preset error threshold. In this way, the trained artificial intelligence model can accurately predict the risk event based on the environment information and the road status information of the target geographical region in the predicted time period.

It can be learned that a risk event that may occur in a specific geographical region range is predicted based on the artificial intelligence model, and factors such as ambient environment information and road status information are combined in the prediction process. This effectively improves accuracy of the predicted risk event.

In embodiments of this application, when the obtaining risk event information is generating the risk event information, and a generation end of the risk event information is a vehicle, the vehicle needs to satisfy at least one of the following conditions:
the vehicle is in the predicted region range;
a minimum distance between the vehicle and the predicted region range is less than a first threshold;
the predicted region range has an intersection with a planned path of the vehicle;
a minimum distance between the predicted region range and the planned path of the vehicle is less than a second threshold;
a tile to which the predicted region range belongs is a tile on which the vehicle is located; and
the tile to which the predicted region range belongs is a tile that the planned path of the vehicle passes through.

In other words, the vehicle may generate, based on a current location, risk event information near the location of the vehicle, or generate, based on a planned path, risk event information near the traveling path. It should be noted that the foregoing is merely an example of a limiting condition used when the generation end of the risk event information is the vehicle, and the limiting condition is also applicable to a case in which the generation end of the risk event information is another device on the terminal side.

S102: Store the risk event information.

In embodiments of this application, the risk event information is stored as map data. For example, the risk event information is stored as dynamic layer data of the map.

In an embodiment of this application, the storing the risk event information is specifically: storing the risk event information in a data structure corresponding to the identifier of the risk event. For details of this embodiment, refer to related descriptions in FIG. 5A and FIG. 5B. Details are not described herein again.

In an embodiment of this application, the storing the risk event information is specifically: storing the risk event information in the data structure corresponding to the predicted time range. For details of this embodiment, refer to related descriptions in FIG. 6. Details are not described herein again.

Optionally, in some possible embodiments, the following step may be further performed.

S 103: Determine that an element that affects the risk event changes, and update the risk event information or eliminate the risk event information based on the changed element.

The element is located at the static layer or the dynamic layer in the map. Because the risk event information includes the identification information of the dynamic element that affects the risk event A, the dynamic element that affects the risk event A may be quickly indexed in the map based on the identifier of the dynamic element in the risk event information. When it is detected that the dynamic element that affects the risk event changes, correspondingly, the risk event information also changes.

It should be noted that, it may be determined, based on detection information sent by the road side device or the terminal, that the dynamic element that affects the risk event changes, or it may be determined, based on map data that is dynamically updated in real time, that the dynamic element that affects the risk event changes.

In a specific implementation, the updating the risk event information based on the changed element refers to: modifying, based on the changed element, at least one of the time information, the location information, the risk level information, the risk type information, the warning information, the identification information of the dynamic element that affects the risk event, and the information about the map element that is affected by the risk event in the risk event information.

In another specific implementation, the eliminating the risk event information based on the changed element may be: if it is determined, based on the changed element, that updated risk level information of the risk event satisfies a first risk condition, deleting the risk event information, where the first risk condition may be that the risk level of the risk event is less than the first risk threshold, or the risk event has no risk. It should be noted that the elimination of the risk event information means that the corresponding risk event is predicted to not occur, and the risk event in the map is also deleted.

For example, it is assumed that a risk level of the risk event 1 in the predicted time period 1 is a medium risk, an element that affects the risk event 1 is road surface icing, and an ice thickness in the predicted time period 1 is 3 mm. Because weather changes from cloudy to sunny, which easily accelerates ice melting, it is learned from the map that the road ice element associated with the risk event 1 in the predicted time period 1 disappears. As a result, the risk level of the risk event 1 is updated to no risk, and the risk event information is deleted.

In some possible embodiments, if no change of the dynamic element that affects the risk event is detected from a start moment of the predicted time range of the risk event to an end moment of the predicted time range, the risk event information is deleted when the end moment of the predicted time range is reached.

In some possible embodiments, the dynamic element that affects the risk event also belongs to the dynamic layer data of the map for obtaining the risk event information. When it is detected that the dynamic element that affects the risk event changes, the risk event information may alternatively be updated based on the artificial intelligence model. Details are not described herein again.

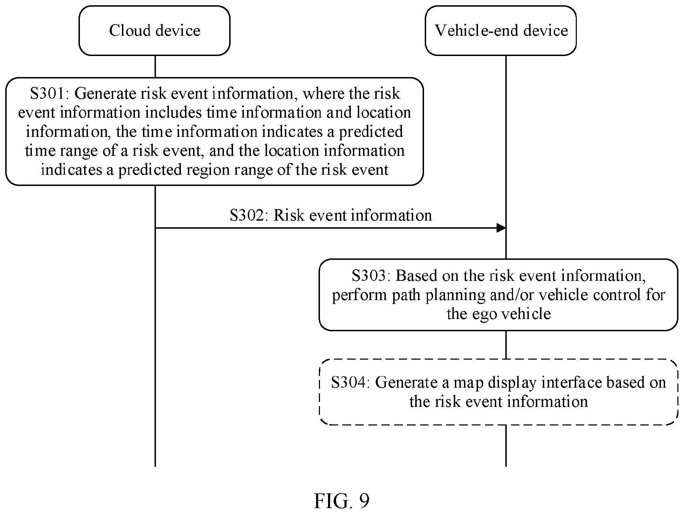

In some possible embodiments, the method further includes: performing road condition monitoring, traffic scheduling, path planning, or vehicle control based on the risk event information. In some possible embodiments, the method further includes: sending the risk event information, so that a receive end of the risk event information performs road condition monitoring, traffic scheduling, path planning, or vehicle control based on the risk event information. For a specific process, refer to related descriptions in the following embodiments in FIG. 8 and FIG. 9. In addition, after the risk event information is updated, the updated risk event information may be further sent.

In some possible embodiments, a map display interface may be further generated based on the risk event information. For a specific process, refer to related descriptions of S304 in the following embodiments in FIG. 9. Details are not described herein again.

It can be learned that, in embodiments of this application, the risk event information of the risk event that may occur in the specific geographical region range can be provided. The risk event information is of reference significance, and helps improve richness of the map. In addition, the data structure for storing the risk event information is further provided, so that the risk event information can be clearly and intuitively expressed. The obtaining of the risk event information comprehensively considers factors such as the ambient environment information and the road status information, and can effectively improve accuracy of the risk event information.

FIG. 8 is a flowchart of another map data processing method according to an embodiment of this application. The method shown in FIG. 8 may be performed by a network side device, a road side device, or a terminal. The method includes but is not limited to the following steps.

S201: Generate risk event information, where the risk event information includes time information and location information, the time information indicates a predicted time range of a risk event, and the location information indicates a predicted region range of the risk event. For details of this step, refer to descriptions of S101 in embodiments in FIG. 3, and details are not described herein again.

S202: Perform road condition monitoring, traffic scheduling, a path planning operation, or vehicle control based on the risk event information.

In a specific implementation, performing road condition monitoring based on the risk event information may be: performing road condition monitoring on a predicted region range in a map based on the risk event information. In some possible embodiments, road condition monitoring may be further performed, based on the risk event information, on a predicted region range that is in a map and that exceeds a risk threshold.

In a specific implementation, performing traffic scheduling based on the risk event information may be: determining, based on the risk event information and road topology information in a map, a road region associated with the predicted region range, and prompting a vehicle in the road region with the corresponding risk event, or controlling a traffic volume of the road region. It can be learned that performing traffic scheduling based on the risk event information can effectively improve travel safety of the vehicle.

The road region includes at least one road segment or includes at least one lane segment. A plurality of road segments in the road region may correspond to a same road identifier (that is, belong to a same road), or may correspond to a plurality of road identifiers (that is, belong to different roads). Similarly, a plurality of lane segments in the road region may correspond to a same lane identifier, or may correspond to a plurality of lane identifiers.

When the road region satisfies at least one of the following conditions, the road region is associated with the predicted region range:
(1) a distance between the road region and the predicted region range is less than or equal to a preset distance threshold;
(2) traffic is available between the road region and the predicted region range; or
(3) an estimated moment at which the vehicle in the road region arrives at the predicted region range in which the risk event is located belongs to the predicted time range corresponding to the risk event.

For example, the risk event information indicates "a region 1, a time period 1, and a high risk". The network-side device, for example, a cloud device, determines, based on the risk event information, that a road region associated with the region 1 in which the risk event 1 is located includes a region 2 and a region 3. In this case, the network side device notifies vehicles in the region 2 and the region 3 of the risk event before the time period 1. For example, the network side device sends "The region 1 is a high-risk region in the time period 1, and needs to be bypassed." Alternatively, the network side device may control traffic volumes of the region 2 and the region 3. For example, the network side device selectively sets some road sections in the region 2 or the region 3 to be forbidden for entrance in a preset time period, or limits a speed of a road in the region 2 and the region 3, or guides a vehicle in the region 2 or the region 3 to change a navigation path to avoid the region 1. In this way, a traffic volume in the region 1 in the time period 1 is reduced, traffic scheduling is implemented, and the travel risk of the vehicle is greatly reduced.

In a specific implementation, performing vehicle control based on the risk event information may be: when it is determined that the vehicle is to pass through the predicted region range in which the risk event is located, controlling the vehicle to perform at least one of the following operations: changing a lane; adjusting a traveling speed; updating a navigation path; turning on a warning light; and prompting a driver with the risk event. The vehicle may subscribe to a risk event service from the network side device, for example, a cloud, in advance, so that the vehicle can take a targeted measure in advance to cope with the risk event. This improves running safety of the vehicle.

In a specific implementation, performing path planning based on the risk event information may be: in response to a path planning request from a terminal (for example, a vehicle or a mobile phone), performing path planning based on the risk event information and information such as a destination of the terminal that is carried in the path planning request, to obtain a lowest-risk path. In another specific implementation, path planning may alternatively be performed based on the risk event information with reference to at least one of a sensing capability, a vehicle type, and an autonomous driving level of the vehicle, to obtain a lowest-risk path. In some possible embodiments, the lowest-risk path may be further recommended to the terminal, or a plurality of paths including the lowest-risk path may be recommended to the terminal for selection by the terminal. For details of the path planning operation, refer to related descriptions of S303 in embodiments in FIG. 9. For brevity of the specification, details are not described herein again.

In some possible embodiments, a plurality of operations in road condition monitoring, traffic scheduling, path planning, and vehicle control may alternatively be performed based on the risk event information. For a specific process, refer to the foregoing related descriptions. Details are not described herein again.

It can be learned that, in embodiments of this application, the network side device, the road side device, or the like generates risk event information that is of reference significance and that is of a risk event that may occur in a specific geographical region range. The network side device or the road side device may further use the risk event information to implement functions such as traffic scheduling, road condition monitoring, path planning, and vehicle control, to effectively respond to a risk event in a map from a macro perspective, and help reduce occurrence of a traffic accident.

FIG. 9 is a flowchart of another map data processing method according to an embodiment of this application. The method is applied between a network side device and a terminal. A cloud device and a vehicle-end device are used as an example herein. In other words, the method is applied between the cloud device and the vehicle-end device. However, in this application, the method described in FIG. 9 is not limited to being applied only between the cloud device and the vehicle-end device. For example, the method may be further applied between a road side device and a terminal, or between a terminal and a terminal. The method includes but is not limited to the following steps.

S301: A cloud device generates risk event information, where the risk event information includes time information and location information, the time information indicates a predicted time range of a risk event, and the location information indicates a predicted region range of the risk event. For details of this step, refer to descriptions of S101 in embodiments in FIG. 3, and details are not described herein again.

S302: The cloud device sends the risk event information to the vehicle-end device.

In embodiments of this application, that the cloud device sends the risk event information to the vehicle-end device may be: The cloud device sends the risk event information in a broadcast manner. In other words, the risk event information may be carried in broadcast information.

Further, that the cloud device broadcasts the risk event information may be: The cloud device, broadcasts the risk event information based on an identifier of a tile to which the predicted region range belongs, or the cloud device broadcasts the risk event information based on an identifier of a road to which the predicted region range belongs.

In some possible embodiments, the cloud device may deliver the risk event information with reference to a time period and the identifier of the tile, or with reference to a time period and the identifier of the road. This is not specifically limited herein.

In embodiments of this application, the cloud device may alternatively directly send the risk event information to the vehicle-end device, where the vehicle-end device satisfies at least one of the following conditions:
(1) the vehicle-end device is in the predicted region range;
(2) a minimum distance between the vehicle-end device and the predicted region range is less than a first threshold;
(3) the predicted region range has an intersection with a planned path of the vehicle-end device;
(4) a minimum distance between the predicted region range and the planned path of the vehicle-end device is less than a second threshold;
(5) a tile to which the predicted region range belongs is a tile on which the vehicle-end device is located;
(6) the tile to which the predicted region range belongs is a tile that the planned path of the vehicle-end device passes through; and
(7) a road to which the predicted region range belongs is a road on which the vehicle-end device is located.

It can be learned that, if the cloud device directly sends the risk event information to the vehicle-end device, the vehicle-end device pre-defines a risk prompt service on the cloud device, so that the vehicle-end device can obtain the risk event information from the cloud in a timely manner, to respond to the risk event in advance. This improves traveling safety of the ego vehicle.

In some possible embodiments, the cloud device may alternatively deliver the risk event information based on an actual requirement of the vehicle-end device. For example, risk event information of a region in which the planned path of the vehicle-end device is located is delivered, risk event information of at least one tile in a location of the vehicle-end device is delivered, and risk event information of a specific region in a specific time period is delivered. This is not specifically limited herein.

In some possible embodiments, the cloud device sends the risk event information in advance. In other words, a moment at which the cloud device sends the risk event information is earlier than a start moment of the predicted time range of the risk event information. In some possible embodiments, when a delay between a sending moment at which the cloud device sends the risk event information and a receiving moment at which the vehicle-end device receives the risk event information is ignored, a latest moment at which the cloud device sends the risk event information may alternatively be equal to a start moment of an earliest predicted time range of the risk event information.

S303: Based on the risk event information, the vehicle-end device performs path planning and/or vehicle control for the ego vehicle.

In embodiments of this application, that the vehicle-end device performs path planning based on the risk event information is specifically: The vehicle-end device plans a lowest-risk path based on the risk event information.

The lowest-risk path is a path with no risk event, a path with no risk event whose risk level exceeds a risk threshold, or a path with no risk event of a specific risk type.

The lowest-risk path being a path with no risk event may be understood as a region that the lowest-risk path passes through within a specific time range is a region with no risk event. The lowest-risk path being a path with no risk event whose risk level exceeds the risk threshold may be understood that a predicted risk event exists in a region that the lowest-risk path passes through within a specific time range, but a risk level of the risk event does not exceed the risk threshold (that is, it is considered that a larger value of a risk level indicates a more dangerous risk event). The lowest-risk path being a path with no risk event of the specific risk type may be understood that a predicted risk event exists in a region that the lowest-risk path passes through within a specific time range, but a risk type of the risk event is not of the specific risk type.

In a specific implementation, the planning a lowest-risk path based on the risk event information includes: planning the lowest-risk path of the vehicle-end device based on the risk event information and a sensing capability of the vehicle-end device.

The vehicle can effectively sense an ambient environment by using a sensing element (or referred to as a vehicle-mounted sensor) of the vehicle. The sensing capability of the vehicle includes sensing of the vehicle and sensing of the environment. Components used to sense the vehicle include sensors in a power, a chassis, a vehicle body, an electronic and electrical system, and the like. Components used to sense the environment include the vehicle-mounted camera, a millimeter-wave radar, a lidar, and the like.

For example, when the lowest-risk path of the vehicle-end device is planned, with reference to the sensing capability of the vehicle-end device, not only the risk event information can be verified, but also more accurate time information and location information of the risk event can be obtained through recalculation based on information that is related to the risk event and that is sensed by the vehicle at the current location, so that the planned lowest-risk path is more accurate.

It may be understood that a better sensing capability of the vehicle-end device indicates a stronger capability of responding to the risk event, and better inclusiveness of the lowest-risk path of the vehicle-end device. In other words, the lowest-risk path has a higher requirement on a risk resistance capability of the vehicle-end device. For example, if the vehicle-end device has a good sensing capability, the vehicle-end device has a strong capability of responding to a risk event, and the lowest-risk path may be any one of a path with no risk event, a path with a risk event whose risk level exceeds a risk threshold, and a path with no risk event of a specific risk type. If the vehicle-end device has a poor sensing capability, the vehicle-end device has a poor capability of responding to a risk event, and the lowest-risk path needs to be, as much as possible, a path with no risk event.

In a specific implementation, the planning a lowest-risk path based on the risk event information includes: planning the lowest-risk path of the vehicle-end device based on the risk event information and a vehicle type of the vehicle-end device.

There are a plurality of classification manners for vehicle types. For example, based on a purpose, vehicles may be classified into transport vehicles, dedicated vehicles, and special-purpose vehicles. The transport vehicles may be further classified into sedans, passenger vehicles, and trucks. The dedicated vehicles may be further classified into a transport type (including refrigerated vehicles, sand dump trucks, and the like) and an operation type (including fire engines, ambulances, and the like). The special-purpose vehicles may be further classified into entertainment vehicles, competition vehicles, and the like. For another example, based on a power apparatus type, vehicles may be classified into internal combustion engine vehicles, electric vehicles, jet vehicles, and the like. Based on a space size, vehicles may be classified into mini vehicles, small-sized vehicles, compact vehicles, medium-sized vehicles, medium- and large-sized vehicles, and the like. Classification of vehicle types is not specifically limited in embodiments of this application.

For example, vehicles of different types have different driving control difficulty and different traveling environments. For example, control of a small-sized vehicle is more flexible than control of a medium- and large-sized vehicle. Therefore, a capability of the small-sized vehicle to respond to some types of risk events is stronger than a capability of the medium- and large-sized vehicle to respond to the risk events. Therefore, inclusiveness of a lowest-risk path of the small-sized vehicle may be stronger than inclusiveness of a lowest-risk path of the medium-and large-sized vehicle. In other words, a requirement of the lowest-risk path for a risk resistance capability of the small-sized vehicle is greater than a requirement of the lowest-risk path for a risk resistance capability of the medium- and large-sized vehicle. The small-sized vehicle may be less capable of responding to other types of risk events than a large-sized vehicle.

The lowest-risk path of the vehicle-end device is planned based on the vehicle type, so that the lowest-risk path matches a risk response capability of the vehicle, and vehicles of different types have appropriate lowest-risk paths.

For example, it is assumed that the vehicle type is an electric vehicle. When the lowest-risk path is planned, it needs to be considered with reference to the vehicle type that the lowest-risk path needs to include at least one charging pile station that can supplement power for the vehicle in a timely manner, to ensure that the vehicle can smoothly travel to a destination along the lowest-risk path.

In a specific implementation, the planning a lowest-risk path based on the risk event information includes: planning the lowest-risk path of the vehicle-end device based on the risk event information and an autonomous driving level of the vehicle-end device.

Autonomous driving may also be referred to as intelligent driving or assisted driving, and is an important direction of intelligent development of vehicles. With development of sensing technologies and improvement of chip capabilities, intelligent driving provides more abundant driving functions for people, and gradually implements driving experience of different levels. The society of automotive engineers (society of automotive engineers, SAE) provides a driving automation level standard, including driving levels L0 to L5. The level L0 is no automation. A human driver is fully responsible for operating a vehicle. In a traveling process, a warning or assistance may be obtained from a driving system, for example, autonomous emergency braking (autonomous emergency braking, AEB), blind spot monitoring (blind spot monitoring, BSM), or lane departure warning (lane departure warning, LDW). The level L1 is driving support. A driving operation is jointly performed by a human driver and a driving system, the driving system may provide driving support for a steering wheel or a speeding up or speeding down operation based on a driving environment, and another driving operation is performed by the human driver, for example, adaptive cruise control (adaptive cruise control, ACC) or lane keep assistance/support (lane keep assistance/support, LKA/LKS). The level L2 is partial automation. Driving support is provided for a plurality of a steering wheel and a speeding up or speeding down operation based on a driving environment, and another driving action is performed by a human driver, for example, a vehicle following function that combines adaptive cruise control (adaptive cruise control, ACC) and lane keep assistance (lane keep assistance, LKA). The level L3 is conditional automation. A driving system may complete all driving operations. However, a human driver needs to respond to a request of the driving system at an appropriate time, that is, the human driver needs to be ready to take over the driving system. The level L4 is high automation. A driving system may complete all driving operations, and a human driver does not necessarily need to respond to a request of the driving system. For example, when road and environment conditions permit (for example, a closed campus, a highway, an urban road, or a fixed driving path), the human driver may not take over driving. The level L5 is full automation. A driving system may independently complete driving operations under various road and environment conditions that can be handled by a human driver. It can be learned that, at the levels L0 to L2, the driving system mainly provides support for the driver, and the driver still needs to perform driving supervision, and perform steering, braking, or acceleration as required, to ensure safety. At the levels L3 to L5, the driving system can replace the driver to complete all the driving operations. At the level L3, the driver needs to be ready to take over driving. At the levels L4 and L5, the driving system can implement full driving under some or all conditions. The driver may choose whether to take over driving.

The foregoing levels are an example. With technology evolution or different regulations in different countries or regions, the foregoing levels may change. For example, the vehicle automation levels proposed by the Ministry of Industry and Information Technology of China includes six levels of vehicle driving automation, where levels 0 to 2 are driver assistance, a system assists a human in performing a dynamic driving task, and a driving subject is still a driver; and levels 3 to 5 are autonomous driving, a system performs a dynamic driving task in place of a human in a designed running condition, and a driving subject is the system when a function is activated. Names and definitions of the levels are as follows: A level-0 driving automation (emergency assistance, emergency assistance) system cannot continuously perform horizontal or vertical motion control on a vehicle in a dynamic driving task, but has a capability of continuously detecting and responding to some targets and events in the dynamic driving task. A level-1 driving automation (partial driver assistance, partial driver assistance) system continuously performs horizontal or vertical motion control on a vehicle in a dynamic driving task under a designed running condition (or referred to as an operational design domain ODD) of the system, and has a capability of detecting and responding to some targets and events that adapt to the horizontal or vertical motion control performed on the vehicle. A level-2 driving automation (combined driver assistance, combined driver assistance) system continuously performs horizontal and vertical motion control on a vehicle in a dynamic driving task under a designed running condition of the system, and has a capability of detecting and responding to some targets and events that adapt to the horizontal and vertical motion control performed on the vehicle. A level-3 driving automation (conditionally autonomous driving, conditionally automated driving) system continuously executes all dynamic driving tasks under a designed running condition. A level-4 driving automation (highly autonomous driving, highly automated driving) system continuously executes all dynamic driving tasks and automatically performs a minimum risk strategy under a designed running condition of the system. A level-5 driving automation (fully autonomous driving, fully automated driving) system continuously executes all dynamic driving tasks and automatically performs a minimum risk strategy under any traveling condition. The horizontal control is mainly used for vehicle steering control, for example, controlling torque or an angle of a steering wheel to control a direction of the vehicle. The vertical control is mainly used for vehicle speed control, for example, controlling a braking pedal, an acceleration pedal, or a gear to control acceleration/deceleration, braking, or the like of the vehicle.

Regardless of which level manner is used, descriptions in embodiments of this application may be applied to different level cases.

The operational design domain (Operational Design Domain, ODD) refers to a condition under which the autonomous driving system can operate safely. A specified condition may include a geographical location, a road type, a speed range, weather, a time, national and local traffic laws and regulations, and the like. A highway pilot (Highway Pilot, HWP) is used as an example. The system recognizes that the vehicle is within the ODD (for example, the vehicle is currently traveling on a highway, the weather is clear, the vehicle is at an appropriate speed, a lighting condition is good, and a global positioning system (Global Positioning System, GPS) has stable signals), and the HWP system continuously executes all the dynamic driving tasks after a driver confirms that the system is activated.

For example, at the levels L3 and L4, driving of the vehicle is mainly controlled by the autonomous driving system. In this case, with reference to the autonomous driving level of the vehicle, a region that the planned lowest-risk path passes through needs to satisfy requirements of the ODD as much as possible. In other words, the lowest-risk path needs to avoid a region with a poor road status and a bad weather condition as much as possible. In some possible embodiments, for a vehicle at the level L3 or L4, when a region that a lowest-risk path pass through does not satisfy the requirements of the ODD, the vehicle may still request a driver to take over the vehicle. This is not specifically limited herein.

However, for a vehicle at the level L5, the vehicle has a good risk response capability. In this case, a planned lowest-risk path has strong inclusiveness. In addition, it can be learned that a vehicle at the level L0, L1, or L2 mainly depends on a driving operation performed by a driver, and a risk response capability of the vehicle mainly depends on driving experience of the driver. In this case, in addition to an autonomous driving level of the vehicle, a lowest-risk path may be further planned with reference to a driving habit and/or a driving capability of the driver.

In some possible embodiments, when the lowest-risk path is planned based on the risk event information, the lowest-risk path may be further planned with reference to a plurality of the sensing capability of the vehicle-end device, the vehicle type of the vehicle-end device, and the autonomous driving level of the vehicle-end device. For details, refer to related descriptions in the foregoing embodiments. Details are not described herein again.

For example, a process of obtaining the lowest-risk path may be specifically: obtaining a plurality of paths, and determining that the predicted region range includes a location point in the plurality of paths; predicting an estimated time for the vehicle-end device to travel to the location point; determining, based on the time information and the location information in the risk event information, the predicted time range corresponding to the predicted region range; determining that the predicted time range includes the estimated time; determining a traveling risk of at least one of the plurality of paths based on the risk event; and determining the lowest-risk path in the plurality of paths based on the traveling risk of the path.

In other words, when planning the lowest-risk path, the vehicle-end device needs to estimate, with reference to a traveling speed of the vehicle-end device, an estimated time at which the vehicle-end device actually arrives at each location point on the path, so that a location of the vehicle-end device at each estimated time does not belong to the predicted region range of the risk event as much as possible, or each estimated time does not belong to the predicted time range of the risk event as much as possible.

Specifically, it is assumed that the vehicle-end device arrives at a point C from a point A by passing through a point B, and there are risk events near the three points A, B, and C at a current moment. However, when the lowest-risk path of the vehicle-end device is planned, not only the path is planned for the vehicle based on the risk events at the three points at the current moment, but also estimated times for the vehicle-end device to arrive at the three points A, B, and C are considered. For example, it is estimated that the vehicle-end device arrives at the point A at a moment t1, arrives at the point B at a moment t2, and arrives at the point C at a moment t3. In this case, a path of the vehicle-end device is planned by separately using risk event information near the point A at the moment t1, risk event information near the point B at the moment t2, and risk event information near the point C at the moment t3.

For example, in FIG. 1, it is assumed that the current moment is 9:00, and the vehicle intends to arrive at the location D from the location A, and there are two travelable paths: a path 1 and a path 2. The path 1 is A→B→C→D, the path 2 is A→B→E→F→C→D, and a length of the path 1 is less than a length of the path 2. It is assumed that the vehicle receives the broadcast risk event information at the location A, and obtains, based on the risk event information, information indicating that the region 1 in the road section BC is a high-risk area in the predicted time range 9:30 to 11:00. The following uses two examples to describe a process in which the vehicle performs a path planning operation based on the risk event information.

Example 1: The vehicle first selects the path 1: A→B→C→D, and the vehicle estimates, based on a current traveling speed of the vehicle, that moments at which the vehicle arrives at the location B, the location C, and the location D are 9:05, 9:20, and 9:25 respectively. It can be learned that the vehicle successfully passes through the region 1 in the road section BC before 9:20, which is earlier than the start moment 9:30 of the predicted time range 9:30 to 11:00 of the risk event. Therefore, the path 1: A→B→C→D is determined as a path with no risk. In addition, the length of the path 1 is less than the length of the path 2. Therefore, the path 1 is an optimal navigation path.

Example 2: The vehicle first selects the path 1: A→B→C→D. It is assumed that the vehicle estimates, based on a current traveling speed of the vehicle, that moments at which the vehicle arrives at the location B, the location C, and the location D are 9:30, 10:30, and 11:00 respectively. It can be learned that a moment at which the vehicle arrives at the region 1 in the road section BC belongs to the predicted time range 9:30 to 11:00. In other words, if the vehicle travels along the path A→B→C→D, the vehicle passes through the high-risk region 1 in the predicted time range 9:30 to 11:00. A risk event exists in the region that the path 1 passes through, and the path 1 has low safety. Therefore, the vehicle analyzes the path 2, and determines, through analysis, that the path 2 A→B→E→F→C→D is a path with no risk, so that the path 2 is used as the lowest-risk path, to avoid the region 1 in the predicted time period 9:30 to 11:00. This improves driving safety and driving decision accuracy.

In embodiments of this application, after obtaining the lowest-risk path, the vehicle-end device may further recommend the lowest-risk path to the user, or the vehicle-end device may control the ego vehicle to travel along the lowest-risk path.

In embodiments of this application, after obtaining the lowest-risk path, the vehicle-end device may further recommend a plurality of paths to the user, where the plurality of paths include the lowest-risk path; receive feedback information from the user, where the feedback information indicates a path selected by the user from the plurality of paths; and control the ego vehicle to travel along the path selected by the user.

For example, after the user enters a start point and an end point, a navigation application may recommend a travel path to the user based on a travel strategy, for example, a shortest distance, shortest duration, fewest red lights, the most fuel-saving, or the most toll-saving. The vehicle, a portable terminal, or a device installed on the road side or the cloud may use the risk event information, and formulate a lowest-risk path for the user or recommend a plurality of paths including the lowest-risk path to the user by using the installed navigation application and with reference to a travel requirement (including but not limited to the start point, the end point, a travel time, or a travel manner) of the user. In addition to the lowest-risk path, the plurality of paths may further include a shortest-duration path, a shortest-distance path, and the like. In some possible embodiments, the lowest-risk path may alternatively have the shortest duration or the shortest distance. This is not specifically limited herein.

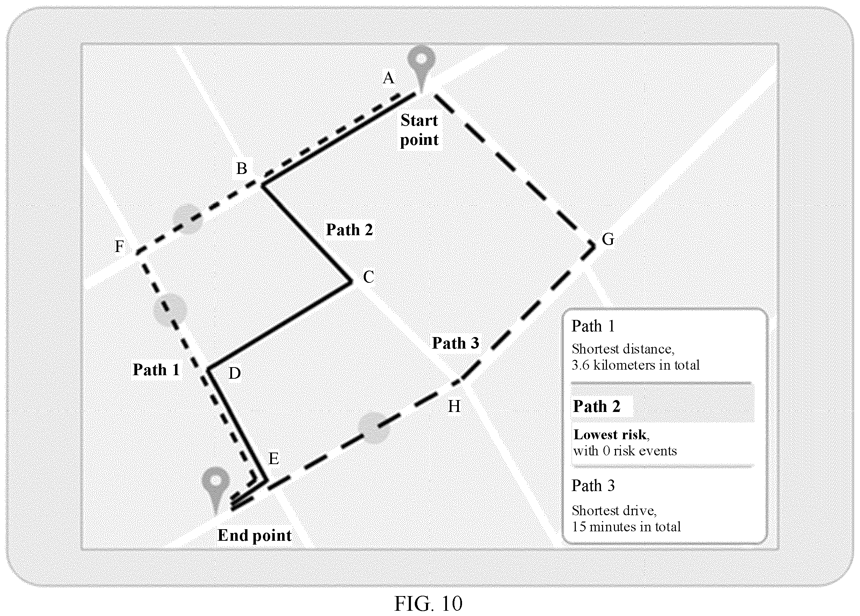

FIG. 10 is a diagram of a path recommendation interface according to an embodiment of this application. On a navigation display interface in FIG. 10, a plurality of travel paths in different strategies are recommended to the user, and a rectangular box in the lower right corner describes the paths in a text form: A path 1 passing through A-B-F-D-E is a shortest path with a total distance of 3.6 km; a path 2 passing through A-B-C-D-E is a lowest-risk path with 0 risk event; and a path 3 passing through A-G-H-E is a path with a shortest drive of 15 minutes in total. In FIG. 10, a circular region on each path represents a predicted range region in which a risk event is located. It can be learned that the path 1 has two circular regions, and therefore a quantity of risk events on the path 1 is 2; the path 3 has one circular region, and therefore a quantity of risk events on the path 3 is 1; and a quantity of risk events on the path 2 is 0, and therefore the path 2 is the lowest-risk path. Optionally, the user may select one path from the three paths shown in FIG. 10, and control, in response to a selection operation of the user, the vehicle to travel along the path selected by the user.

In embodiments of this application, the controlling, based on the risk event information, the ego vehicle includes: when it is determined that the vehicle is to pass through the predicted region range in which the risk event is located, controlling the vehicle to perform at least one of the following operations: changing a lane; adjusting the traveling speed; updating the navigation path; turning on a warning light; and prompting the driver or the driving system with the risk event. Therefore, in a driving process, the vehicle-end device facilitates real-time decision-making based on the risk event information, to improve safety of the vehicle-end device.

Optionally, in some possible embodiments, the following step may be further performed.

S304: The vehicle-end device generates a map display interface based on the risk event information.

In embodiments of this application, the display apparatus of the vehicle-end device may present the map display interface. For example, the display apparatus may be a head unit tablet, a vehicle-mounted display, a head-up display (head-up display, HUD) system, or the like of the vehicle-end device. This is not specifically limited herein.

In embodiments of this application, the risk event information may be presented on the map display interface in at least one of the following manners:
(1) dynamically displaying a change of the risk event on the map display interface based on the time information and the location information;
(2) marking a predicted region range of at least one risk event whose risk level at a current time exceeds a threshold in the risk event and description information of the at least one risk event;
(3) marking a predicted region range of at least one risk event related to the navigation path in the risk event and description information of the at least one risk event;
(4) marking a predicted region range of at least one risk event at a time selected by the user and description information of the at least one risk event;
(5) marking a predicted region range of at least one risk event that satisfies a risk type selected by the user and description information of the at least one risk event;
(6) using different colors to mark predicted region ranges corresponding to risk events of different risk levels; and
(7) using different colors to mark predicted region ranges corresponding to risk events of different risk types.

For the manner (1), the change of the risk event may be dynamically displayed on the map display interface, so that the driver can know a change trend of the risk event in the front region in advance, and can adjust a driving strategy of the driver in a timely manner, thereby improving safety of the driver.

For the manner (2), based on Table 1, it is assumed that the threshold is set to "2", and the risk event whose risk level exceeds the threshold is a risk event whose risk level exceeds the threshold "2", that is, related information of a risk event whose danger degree is the "high risk" is marked and displayed. In this way, the user may be prompted to focus on the risk event whose risk level exceeds the threshold.

For the manner (3), the marked risk event related to the navigation path satisfies two dimensions: time and space. For example, the navigation path indicates that the vehicle arrives at the point C from the point A through the point B, and there are risk events near the points A, B, and C at the current moment. However, it is estimated that the vehicle arrives at the points A, B, and C at t1, t2, and t3 respectively. In this case, only related information of a risk event near the point A at the moment t1, related information of a risk event near the point B at the moment t2, and related information of a risk event near the point C at the moment t3 need to be marked. When the risk event related to the navigation path is marked, in consideration of display clarity, at least one risk event that is related to the navigation path within a specific range from the current location may alternatively be marked first.

For the manner (4), the user may further select a time period of interest on the map display interface, and view related information of at least one risk event in the time period. The time period information helps improve driving decision accuracy.

When the risk event information is presented on the map display interface, the selection operation of the user may be generated based on any one of the following forms: tapping, dragging, sliding, a voice, and the like.

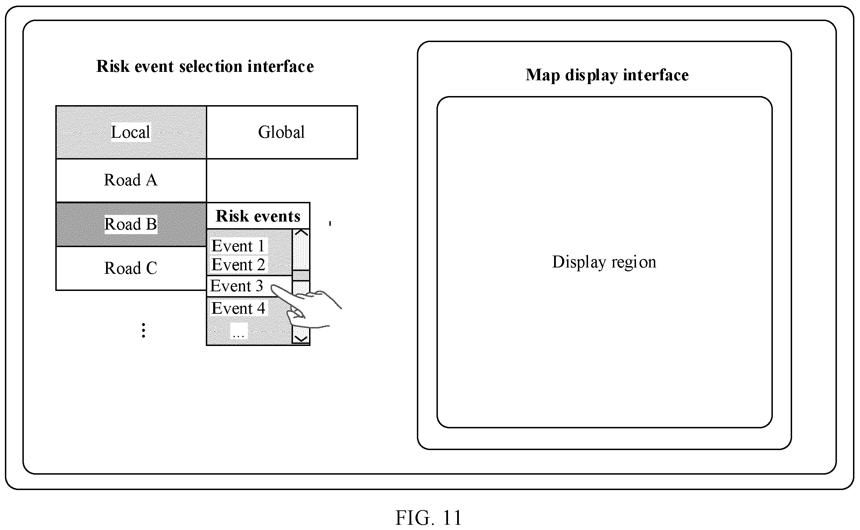

FIG. 11 shows an interface of a display apparatus according to an embodiment of this application. In FIG. 11, the interface of the display apparatus mainly includes two parts. One part is a risk event selection interface, and the other part is a map display interface. On the risk event selection interface, a "local" option button and a "global" option button are set. An option button of at least one road, for example, a road A, a road B, or a road C, is listed under the "local" option button. Further, when the "road B" option button is pointed to, a list of risk events on the road B is listed on the right side. It can be learned that the list of risk events on the road B includes an event 1, an event 2, an event 3, and an event 4. On the map display interface, after a user selects an option button on the risk event selection interface on the left side, in response to the operation, related information about a risk event is displayed in a display region of the map display interface on the right side.

In FIG. 11, when it is expected to display the "event 3" in the display region of the map display interface, the user may tap the "event 3" option button, or may drag the "event 3" to the right display region, or may slide from a location of the "event 3" option button to the right display region, or may send a voice instruction of "Display the event 3", or the like.

In some possible embodiments, a "time period" option button may be further set in the risk event selection interface shown in FIG. 11, so that the user can view related information of at least one risk event in a time period of interest. Optionally, the time period may be generated according to a default setting, so as to be directly selected by the user. The time period may alternatively be set online by the user. This is not specifically limited herein.

In some possible embodiments, at least one of option buttons such as a "risk level", a "risk type", and a "geographical region range" may be further set on the risk event selection interface shown in FIG. 11, and may be used as a filtering condition for displaying a risk event on the map display interface. For example, only related information of a risk event whose risk level is medium or higher is marked, related information of a risk event whose risk type is a collision risk is marked, and related information of a risk event whose geographical region range is within 100 m away from a current location is marked.

It should be noted that FIG. 11 is merely an example of the interface of the display apparatus, and the interface of the display apparatus is not limited to a form shown in FIG. 11 in embodiments of this application. In some possible embodiments, an identifier of a map tile may be further added under the "local" option button on the risk event selection interface shown in FIG. 11 for road classification. For another example, an identifier of a lane may be further added under the "road" option button shown in FIG. 11, to further refine the road. This is not specifically limited in embodiments of this application.

In embodiments of this application, when risk event information is presented on the map display interface, only a predicted region range in which the risk event is located may be marked, or detailed information of the risk event may be displayed in a manner like a pop-up box or an interface text when the predicted region range is marked.

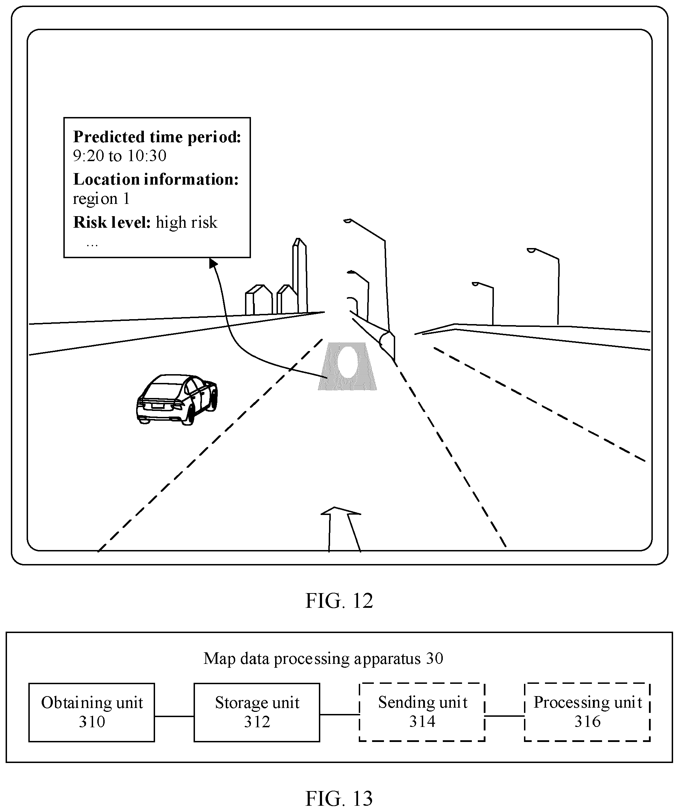

FIG. 12 is a diagram of a map display interface according to an embodiment of this application. In FIG. 12, a risk event is displayed. Specifically, a quadrilateral region on a road ahead represents a predicted region range in which the risk event is located, and a pop-up box next to the quadrilateral region displays detailed information of the risk event, including "The predicted time period is 9:20 to 10:30, the location information is coordinates of the region 1, and the risk level is a high risk". Based on the pop-up box, it may be learned that the region 1 has a high risk in 9:20 to 10:30. In some possible embodiments, when the user taps the "event 3" of the "road B" on the risk event selection interface shown in FIG. 10, a picture shown in FIG. 12 may be displayed in the display region of the map display interface in FIG. 11.

In embodiments of this application, on the map display interface, a dynamic element that is in the risk event information and that affects the risk event may be further displayed. For example, in FIG. 12, a road surface ice element that affects the risk event is further marked, and an elliptical region in the quadrilateral region is a region range in which the road surface ice element is located. In this way, a user may be prompted to pay attention to a road environment around the risk region, and drive with caution.

In some possible embodiments, when a plurality of risk events are presented on the map display interface, different colors may be used to mark predicted region ranges in which risk events of different risk levels are located, or different colors are used to mark predicted region ranges in which risk events of different risk types are located. In this way, a distribution of risk events of different risk levels or different risk types in the map is intuitively and clearly displayed to the user.

In some possible embodiments, when detecting that the vehicle-end device approaches the predicted region range in the predicted time range, the vehicle-end device may further prompt or warn the user by voice that the vehicle-end device is to enter a region in which a risk event exists. When the vehicle-end device has entered the predicted region range, the vehicle-end device may further continuously broadcast voice information such as "Drive with caution" or "Request to take over driving" to prompt the user.

It can be learned that, in embodiments of this application, the cloud device may provide, for the vehicle-end device, risk event information that is of reference significance and that is of a risk event that may occur in a specific geographical region range, and based on the risk event information, the vehicle-end device may perform path planning and vehicle control for the ego vehicle, to better cope with the risk event in the map. This improves traveling safety of the vehicle-end device. In addition, the map display interface is obtained based on the risk event information, so that a distribution of risk events in the map is intuitively and clearly displayed to the user.

An embodiment of this application further provides an electronic map or an electronic map data structure. The electronic map or the electronic map data structure includes risk event information, the risk event information includes time information and location information, the time information indicates a predicted time range of a risk event, and the location information indicates a predicted region range of the risk event. The electronic map or electronic map data is used in a first device. The first device sends the electronic map data that includes the risk event information to a second device, and the second device performs, based on the electronic map, an operation like road condition monitoring, traffic scheduling, path planning, or vehicle control. The first device is, for example, a network side device, for example, a cloud device, a road side device, or a terminal. The second device is, for example, a terminal.

In a specific implementation, the risk event information is stored in the electronic map in a data structure of an event.

In a specific implementation, the risk event information is stored in the electronic map as dynamic layer data.

In a specific implementation, the risk event information further includes at least one of the following content: identification information of the risk event, identification information of a tile to which the risk event belongs, identification information of a road on which the risk event is located, risk level information, risk type information, warning information, identification information of a dynamic element that affects the risk event, and information about a map element that is affected by the risk event. The risk level information indicates a danger degree of the risk event, the risk type information indicates a type of the risk event, and the warning information indicates content with which a driver or a driving system is prompted based on the risk event.

FIG. 13 is a diagram of a functional structure of a map data processing apparatus according to an embodiment of this application. The map data processing apparatus 30 includes an obtaining unit 310 and a storage unit 312. The map data processing apparatus 30 may be implemented by hardware, software, or a combination of software and hardware.

The obtaining unit 310 is configured to generate risk event information, where the risk event information includes time information and location information, the time information indicates a predicted time range of a risk event, and the location information indicates a predicted region range of the risk event. The storage unit 312 is configured to store the risk event information as map data.

In some possible embodiments, the map data processing apparatus 30 further includes a sending unit 314. The sending unit 314 is configured to send the risk event information to a vehicle. In some possible embodiments, the map data processing apparatus 30 further includes a processing unit 316. The processing unit 316 is configured to determine that an element that affects the risk event changes, and update the risk event information or eliminate the risk event information based on the changed element. The processing unit 316 is further configured to perform road condition monitoring, traffic scheduling, path planning, or vehicle control based on the risk event information.

The map data processing apparatus 30 may be configured to implement the method described in embodiments in FIG. 3. In embodiments in FIG. 3, the obtaining unit 310 may be configured to perform S101, the storage unit 312 may be configured to perform S 102, and the processing unit 316 may be configured to perform S103. The sending unit 314 may be configured to perform S302 in embodiments in FIG. 9. The map data processing apparatus 30 may be further configured to implement the method described in embodiments in FIG. 8 and the method on the cloud device side described in embodiments in FIG. 9. For brevity of the specification, details are not described herein again.

One or more of the units in embodiments shown in FIG. 13 may be implemented by software, hardware, firmware, or a combination thereof. The software or firmware includes but is not limited to computer program instructions or code, and may be executed by a hardware processor. The hardware includes but is not limited to various integrated circuits, such as a central processing unit (central processing unit, CPU), a digital signal processor (digital signal processor, DSP), a field programmable gate array (field programmable gate array, FPGA), or an application-specific integrated circuit (application-specific integrated circuit, ASIC).

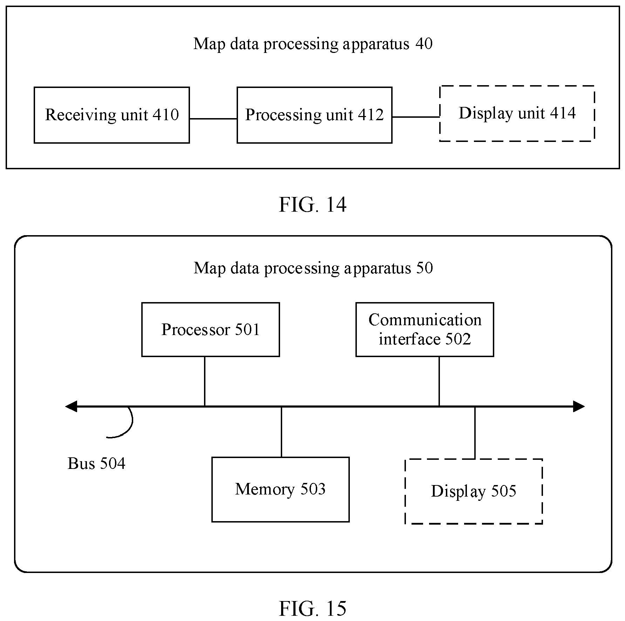

FIG. 14 is a diagram of a functional structure of a map data processing apparatus according to an embodiment of this application. The map data processing apparatus 40 includes a receiving unit 410 and a processing unit 412. The map data processing apparatus 40 may be implemented by hardware, software, or a combination of software and hardware.

The receiving unit 410 is configured to receive risk event information, where the risk event information includes time information and location information, the time information indicates a predicted time range of a risk event, and the location information indicates a predicted region range of the risk event. The processing unit 412 is configured to: based on the risk event information, perform path planning or vehicle control for the ego vehicle.

In some possible embodiments, the map data processing apparatus 40 further includes a display unit 414. The display unit 414 is configured to generate a map display interface based on the risk event information.

The map data processing apparatus 40 may be configured to implement the method on the vehicle-end device side described in embodiments in FIG. 9. In embodiments in FIG. 9, the receiving unit 410 and the processing unit 412 may be configured to perform S303, and the display unit 414 may be configured to perform S304.

One or more of the units in embodiments shown in FIG. 14 may be implemented by software, hardware, firmware, or a combination thereof. The software or firmware includes but is not limited to computer program instructions or code, and may be executed by a hardware processor. The hardware includes but is not limited to various integrated circuits, such as a central processing unit (central processing unit, CPU), a digital signal processor (digital signal processor, DSP), a field programmable gate array (field programmable gate array, FPGA), or an application-specific integrated circuit (application-specific integrated circuit, ASIC).

This application further provides a map data processing apparatus. As shown in FIG. 15, the map data processing apparatus 50 includes a processor 501, a communication interface 502, a memory 503, and a bus 504. The processor 501, the memory 503, and the communication interface 502 communicate with each other through the bus 504. It should be understood that a quantity of processors and a quantity of memories in the map data processing apparatus 50 are not limited in this application.

In a specific implementation, the map data processing apparatus 50 may be a generation end of the electronic map or the electronic map data that includes the risk event information. The map data processing apparatus 50 may be a network side device, a road side device, or a terminal. The network side device may be, for example, a server (for example, an application server or a map server) deployed on a network side, or a component or a chip in the server. The network side device may be deployed in a cloud environment or an edge environment. This is not specifically limited in embodiments of this application. The road side device may be, for example, an apparatus like a road side unit (Road Side Unit, RSU), multi-access edge computing (Multi-Access Edge Computing, MEC), or a sensor, or a component or a chip inside these apparatuses, or may be a system-level device including an RSU and an MEC, or may be a system-level device including an RSU and a sensor, or may be a system-level device including an RSU, an MEC, and a sensor. The terminal may be any device like a vehicle or a portable mobile device (for example, a mobile phone or a tablet), or may be an apparatus, a component, or a chip in any one of the foregoing devices, for example, an on board unit OBU. This is not specifically limited in embodiments of this application.

In another specific implementation, the map data processing apparatus 50 may be a using end of the electronic map that includes the risk event information. The map data processing apparatus 50 may be a network side device, a road side device, or a terminal. The network side device may be, for example, a server (for example, an application server or a map server) deployed on a network side, or a component or a chip in the server. The network side device may be deployed in a cloud environment or an edge environment. This is not specifically limited in embodiments of this application. The road side device may be, for example, an apparatus like a road side unit (Road Side Unit, RSU), multi-access edge computing (Multi-Access Edge Computing, MEC), or a sensor, or a component or a chip inside these apparatuses, or may be a system-level device including an RSU and an MEC, or may be a system-level device including an RSU and a sensor, or may be a system-level device including an RSU, an MEC, and a sensor. The terminal may be any device like a vehicle, an intelligent wearable device (for example, a sports band or a watch), or a portable mobile device (for example, a mobile phone or a tablet), or may be an apparatus, a component, or a chip in any one of the foregoing devices, for example, an OBU. This is not specifically limited in embodiments of this application.

The bus 504 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used to represent the bus in FIG. 15, but this does not mean that there is only one bus or only one type of bus. The bus 504 may include a path for transmitting information between components (for example, the memory 503, the processor 501, and the communication interface 502) of the map data processing apparatus 50.

The processor 501 may include any one or more of processors such as a central processing unit (central processing unit, CPU), a microprocessor (microprocessor, MP), or a digital signal processor (digital signal processor, DSP).

The memory 503 is configured to provide storage space, and the storage space may store data such as an operating system and a computer program. The memory 503 may be one or a combination of a random access memory (random access memory, RAM), an erasable programmable read-only memory (erasable programmable read-only memory, EPROM), a read-only memory (read-only memory, ROM), a compact disc read-only memory (compact disc read-only memory, CD-ROM), or the like. The memory 503 may exist independently, or may be integrated into the processor 501.

The communication interface 502 may be configured to provide an information input or output for the processor 501. Alternatively, the communication interface 502 may be configured to receive data sent from the outside and/or send data to the outside, and may be a wired link interface including an Ethernet cable, or may be a wireless link (for example, Wi-Fi, Bluetooth, or universal wireless transmission) interface. Alternatively, the communication interface 502 may further include a transmitter (for example, a radio frequency transmitter or an antenna), a receiver, or the like coupled to the interface.

In some possible embodiments, when the map data processing apparatus 50 may be a user end of the map that includes the risk event information, the map data processing apparatus 50 further includes a display 505, and the display 505 is connected to or coupled to the processor 501 through the bus 504. The display 505 is configured to generate a map display interface based on the risk event information. The display 505 may be a display screen, and the display screen may be a liquid crystal display (Liquid Crystal Display, LCD), an organic or inorganic light-emitting diode (Organic Light-Emitting Diode, OLED), an active-matrix organic light-emitting diode (Active-Matrix Organic Light-Emitting Diode, AMOLED), or the like. Alternatively, the display 505 may be a head unit tablet, a vehicle-mounted display, a head-up display (head-up display, HUD) system, or the like.

The processor 501 in the map data processing apparatus 50 is configured to read the computer program stored in the memory 503, and is configured to perform the foregoing method, for example, the method described in FIG. 3, FIG. 8, or FIG. 9.

In a possible design manner, the map data processing apparatus 50 may be one or more modules in an execution body of the method (on the cloud device side) shown in FIG. 3, FIG. 8, or FIG. 9. The processor 501 may be configured to read one or more computer programs stored in the memory, to perform the following operations:
generating risk event information, where the risk event information includes time information and location information, the time information indicates a predicted time range of a risk event, and the location information indicates a predicted region range of the risk event;
storing the risk event information as map data through the storage unit 312;
sending the risk event information through the sending unit 314; and
determining that an element that affects the risk event changes, and update the risk event information or eliminate the risk event information based on the changed element.

In another possible design manner, the map data processing apparatus 50 may be one or more modules in an execution body of the method shown in FIG. 8 or FIG. 9. The processor 501 may be configured to read one or more computer programs stored in the memory, to perform the following operations:
receiving risk event information through the receiving unit 410, where the risk event information includes time information and location information, the time information indicates a predicted time range of a risk event, and the location information indicates a predicted region range of the risk event; and
performing road condition monitoring, traffic scheduling, path planning, or vehicle control based on the risk event information; or
generating a map display interface through the display unit 414 based on the risk event information.

An embodiment of this application further provides a communication system. The communication system includes a first map data processing apparatus and a second map data processing apparatus. The first map data processing apparatus may be, for example, the map data processing apparatus 30 shown in FIG. 13, or the map data processing apparatus 50 used as a map generation end in FIG. 15. The second map data processing apparatus may be, for example, the map data processing apparatus 40 shown in FIG. 14, or the map data processing apparatus 50 used as a map use end in FIG. 15. The first map data processing apparatus may be configured to perform the method described in embodiments in FIG. 3 and FIG. 8 and the method on the cloud device side described in embodiments in FIG. 9. The second map data processing apparatus may be configured to perform the method described in embodiments in FIG. 8 and the method on the vehicle-end device side described in embodiments in FIG. 9.

In the foregoing embodiments in this specification, the descriptions of each embodiment have respective focuses. For a part that is not described in detail in an embodiment, refer to related descriptions in another embodiment.

It should be noted that a person of ordinary skill in the art may see that, all or a part of the steps in each method of the foregoing embodiments may be implemented by a program instructing related hardware. The program may be stored in a computer-readable storage medium. The storage medium includes a read-only memory (Read-Only Memory, ROM), a random access memory (Random Access Memory, RAM), a programmable read-only memory (Programmable Read-only Memory, PROM), an erasable programmable read-only memory (Erasable Programmable Read-Only Memory, EPROM), a one-time programmable read-only memory (One-time Programmable Read-Only Memory, OTPROM), an electrically-erasable programmable read-only memory, (Electrically-Erasable Programmable Read-Only Memory, EEPROM), a compact disc read-only memory (Compact Disc Read-Only Memory, CD-ROM), or another optical disk memory, magnetic disk memory, magnetic tape memory, or any other computer-readable medium that can be configured to carry or store data.

The technical solutions of this application essentially, or the part contributing to the conventional technology, or all or some of the technical solutions may be implemented in a form of a software product. A computer program product is stored in a storage medium and includes several instructions for instructing a device (which may be a personal computer, a server, or a network device, a robot, a single-chip microcomputer, a chip, a robot, or the like) to perform all or some of the steps of the methods described in embodiments of this application.

## Claims

1. A map data processing method, wherein the method comprises:
obtaining risk event information, wherein the risk event information comprises time information and location information, the time information indicates a predicted time range of a risk event, and the location information indicates a predicted region range of the risk event; and
storing the risk event information as map data.

2. The method according to claim 1, wherein the method further comprises:
planning a lowest-risk path based on the risk event information.

3. The method according to claim 2, wherein the method further comprises:
recommending the lowest-risk path to a user, or controlling a vehicle to travel along the lowest-risk path.

4. The method according to claim 2, wherein the method further comprises:
recommending a plurality of paths to a user, wherein the plurality of paths comprise the lowest-risk path;
receiving feedback information from the user, wherein the feedback information indicates a path selected by the user from the plurality of paths; and
controlling a vehicle to travel along the selected path.

5. The method according to any one of claims 2 to 4, wherein the planning a lowest-risk path based on the risk event information comprises:
planning the lowest-risk path of the vehicle based on the risk event information and a sensing capability of the vehicle;
planning the lowest-risk path of the vehicle based on the risk event information and a vehicle type of the vehicle; or
planning the lowest-risk path of the vehicle based on the risk event information and an autonomous driving level of the vehicle.

6. The method according to any one of claims 2 to 5, wherein the lowest-risk path is:
a path with no risk event;
a path with no risk event whose risk level exceeds a risk threshold; or
a path with no risk event of a specific risk type.

7. The method according to any one of claims 2 to 6, wherein the planning a lowest-risk path based on the risk event information comprises:
planning a plurality of paths;
determining that the predicted region range comprises a location point in the plurality of paths;
estimating that the vehicle travels to the location point at an estimated time;
determining, based on the time information and the location information in the risk event information, the predicted time range corresponding to the predicted region range;
determining that the predicted time range comprises the estimated time;
determining a traveling risk of at least one of the plurality of paths based on the risk event; and
determining the lowest-risk path in the plurality of paths based on the traveling risk.

8. The method according to any one of claims 1 to 7, wherein the obtaining risk event information comprises:
generating the risk event information, or receiving the risk event information.

9. The method according to any one of claims 1 to 8, wherein the method is applied to the vehicle, or the method further comprises: sending the risk event information to the vehicle, wherein the vehicle satisfies at least one of the following conditions:
the vehicle is in the predicted region range;
a minimum distance between the vehicle and the predicted region range is less than a first threshold;
the predicted region range has an intersection with a planned path of the vehicle;
a minimum distance between the predicted region range and the planned path of the vehicle is less than a second threshold;
a tile to which the predicted region range belongs is a tile on which the vehicle is located; and
the tile to which the predicted region range belongs is a tile that the planned path of the vehicle passes through.

10. The method according to any one of claims 1 to 9, wherein the predicted region range is located on a road or a lane in a map.

11. The method according to any one of claims 1 to 10, wherein the risk event information further comprises at least one of the following content:
identification information of the risk event, identification information of a tile to which the risk event belongs, identification information of a road on which the risk event is located, risk level information, risk type information, warning information, identification information of a dynamic element that affects the risk event, and information about a map element that is affected by the risk event, wherein
the risk level information indicates a danger degree of the risk event, the risk type information indicates a type of the risk event, and the warning information indicates content with which a driver or a driving system is prompted based on the risk event.

12. The method according to any one of claims 1 to 11, wherein the method further comprises:
determining that an element that affects the risk event changes, wherein the element is located at a static layer or a dynamic layer of the map; and
updating the risk event information or eliminating the risk event information based on the changed element.

13. The method according to any one of claims 1 to 12, wherein the method further comprises:
performing road condition monitoring, traffic scheduling, path planning, or vehicle control based on the risk event information.

14. The method according to any one of claims 1 to 13, wherein the method further comprises:
determining that the vehicle is to pass through the predicted region range in which the risk event is located; and
controlling the vehicle to perform at least one of the following operations:
changing the lane;
adjusting a traveling speed;
updating a navigation path;
turning on a warning light; and
prompting the driver with the risk event.

15. The method according to any one of claims 1 to 14, wherein the method further comprises:
determining, based on road topology information in the map, a road region associated with the predicted region range; and
prompting a vehicle in the road region with the risk event, or controlling a traffic volume of the road region.

16. The method according to any one of claims 1 to 15, wherein the method further comprises: presenting the risk event information on a map display interface in at least one of the following manners:
dynamically displaying a change of the risk event on the interface based on the time information and the location information;
marking a predicted region range of at least one risk event whose risk level at a current time exceeds a threshold in the risk event and description information of the at least one risk event;
marking a predicted region range of at least one risk event related to the navigation path in the risk event and description information of the at least one risk event;
marking a predicted region range of at least one risk event at a time selected by the user and description information of the at least one risk event;
marking a predicted region range of at least one risk event that satisfies a risk type selected by the user and description information of the at least one risk event;
using different colors to mark predicted region ranges corresponding to risk events of different risk levels; and
using different colors to mark predicted region ranges corresponding to risk events of different risk types.

17. The method according to any one of claims 1 to 16, wherein the map data comprises first static layer data and first dynamic layer data, and the risk event information is obtained based on the first static layer data and the first dynamic layer data.

18. The method according to claim 17, wherein the storing the risk event information as map data comprises:
storing the risk event information as second dynamic layer data of the map data.

19. A map data processing apparatus, wherein the apparatus comprises:
an obtaining unit, configured to obtain risk event information, wherein the risk event information comprises time information and location information, the time information indicates a predicted time range of a risk event, and the location information indicates a predicted region range of the risk event; and
a storage unit, configured to store the risk event information as map data.

20. The apparatus according to claim 19, wherein the apparatus further comprises:
a planning unit, configured to plan a lowest-risk path based on the risk event information.

21. The apparatus according to claim 20, wherein the apparatus further comprises:
a first processing unit, configured to recommend the lowest-risk path to a user, or control a vehicle to travel along the lowest-risk path.

22. The apparatus according to claim 20, wherein the apparatus further comprises:
a second processing unit, configured to recommend a plurality of paths to a user, wherein the plurality of paths comprise the lowest-risk path; and
a receiving unit, configured to receive feedback information from the user, wherein the feedback information indicates a path selected by the user from the plurality of paths, wherein
the second processing unit is further configured to control a vehicle to travel along the selected path.

23. The apparatus according to any one of claims 20 to 22, wherein the planning unit is specifically configured to:
plan the lowest-risk path of the vehicle based on the risk event information and a sensing capability of the vehicle;
plan the lowest-risk path of the vehicle based on the risk event information and a vehicle type of the vehicle; or
plan the lowest-risk path of the vehicle based on the risk event information and an autonomous driving level of the vehicle.

24. The apparatus according to any one of claims 20 to 23, wherein the lowest-risk path is:
a path with no risk event;
a path with no risk event whose risk level exceeds a risk threshold; or
a path with no risk event of a specific risk type.

25. The apparatus according to any one of claims 20 to 24, wherein the planning unit is specifically configured to:
plan a plurality of paths;
determine that the predicted region range comprises a location point in the plurality of paths;
estimate that the vehicle travels to the location point at an estimated time;
determine, based on the time information and the location information in the risk event information, the predicted time range corresponding to the predicted region range;
determine that the predicted time range comprises the estimated time;
determine a traveling risk of at least one of the plurality of paths based on the risk event; and
determine the lowest-risk path in the plurality of paths based on the traveling risk.

26. The apparatus according to any one of claims 19 to 25, wherein the obtaining unit is specifically configured to:
generate the risk event information, or receive the risk event information.

27. The apparatus according to any one of claims 19 to 26, wherein the apparatus is the vehicle, or the apparatus further comprises a sending unit that sends the risk event information to the vehicle, wherein the vehicle satisfies at least one of the following conditions:
the vehicle is in the predicted region range;
a minimum distance between the vehicle and the predicted region range is less than a first threshold;
the predicted region range has an intersection with a planned path of the vehicle;
a minimum distance between the predicted region range and the planned path of the vehicle is less than a second threshold;
a tile to which the predicted region range belongs is a tile on which the vehicle is located; and
the tile to which the predicted region range belongs is a tile that the planned path of the vehicle passes through.

28. The apparatus according to any one of claims 19 to 27, wherein the predicted region range is located on a road or a lane in a map.

29. The apparatus according to any one of claims 19 to 28, wherein the risk event information further comprises at least one of the following content:
identification information of the risk event, identification information of a tile to which the risk event belongs, identification information of a road on which the risk event is located, risk level information, risk type information, warning information, identification information of a dynamic element that affects the risk event, and information about a map element that is affected by the risk event, wherein
the risk level information indicates a danger degree of the risk event, the risk type information indicates a type of the risk event, and the warning information indicates content with which a driver or a driving system is prompted based on the risk event.

30. The apparatus according to any one of claims 19 to 29, wherein the apparatus further comprises a third processing unit, configured to:
determine that an element that affects the risk event changes, wherein the element is located at a static layer or a dynamic layer of the map; and
update the risk event information or eliminate the risk event information based on the changed element.

31. The apparatus according to any one of claims 19 to 30, wherein the apparatus further comprises a fourth processing unit, configured to:
perform road condition monitoring, traffic scheduling, path planning, or vehicle control based on the risk event information.

32. The apparatus according to any one of claims 19 to 31, wherein the apparatus further comprises a fifth processing unit, configured to:
determine that the vehicle is to pass through the predicted region range in which the risk event is located; and
control the vehicle to perform at least one of the following operations:
changing the lane;
adjusting a traveling speed;
updating a navigation path;
turning on a warning light; and
prompting the driver with the risk event.

33. The apparatus according to any one of claims 19 to 32, wherein the apparatus further comprises a sixth processing unit, configured to:
determine, based on road topology information in the map, a road region associated with the predicted region range; and
prompt a vehicle in the road region with the risk event, or control a traffic volume of the road region.

34. The apparatus according to any one of claims 19 to 33, wherein the apparatus further comprises a display unit, and the display unit is configured to present the risk event information on a map display interface in at least one of the following manners:
dynamically displaying a change of the risk event on the interface based on the time information and the location information;
marking a predicted region range of at least one risk event whose risk level at a current time exceeds a threshold in the risk event and description information of the at least one risk event;
marking a predicted region range of at least one risk event related to the navigation path in the risk event and description information of the at least one risk event;
marking a predicted region range of at least one risk event at a time selected by the user and description information of the at least one risk event;
marking a predicted region range of at least one risk event that satisfies a risk type selected by the user and description information of the at least one risk event;
using different colors to mark predicted region ranges corresponding to risk events of different risk levels; and
using different colors to mark predicted region ranges corresponding to risk events of different risk types.

35. The apparatus according to any one of claims 19 to 34, wherein the map data comprises first static layer data and first dynamic layer data, and the risk event information is obtained based on the first static layer data and the first dynamic layer data.

36. The apparatus according to claim 35, wherein the storage unit is specifically configured to:
store the risk event information as second dynamic layer data of the map data.

37. An electronic map, wherein the electronic map comprises risk event information, the risk event information comprises time information and location information, the time information indicates a predicted time range of a risk event, and the location information indicates a predicted region range of the risk event.

38. A map data processing apparatus, wherein the apparatus comprises a memory and a processor, the memory stores computer program instructions, and the processor runs the computer program instructions to enable the apparatus to perform the method according to any one of claims 1 to 18.

39. A vehicle, wherein the vehicle comprises the apparatus according to any one of claims 19 to 36 or claim 38.

40. A computer-readable storage medium, wherein the computer-readable storage medium stores program instructions, and the program instructions are used to implement the method according to any one of claims 1 to 18.
